(19) Europäisches Patentamt
European Patent Office
Office européen des brevets

(11) EP 1 658 323 B1

(12) EUROPÄISCHE PATENTSCHRIFT

(45) Veröffentlichungstag und Bekanntmachung des Hinweises auf die Patenterteilung:
**20.02.2008 Patentblatt 2008/08**

(21) Anmeldenummer: **04763921.6**

(22) Anmeldetag: **09.08.2004**

(51) Int Cl.:
***C08J 3/12*** (2006.01) ***B02C 23/00*** (2006.01)
***C08K 5/00*** (2006.01) ***C08K 7/02*** (2006.01)
***C08K 7/14*** (2006.01)

(86) Internationale Anmeldenummer:
**PCT/EP2004/008896**

(87) Internationale Veröffentlichungsnummer:
**WO 2005/019312 (03.03.2005 Gazette 2005/09)**

(54) **POLYVINYLACETAL-HALTIGES GRANULAT, VERFAHREN ZU SEINER HERSTELLUNG SOWIE SEINE VERWENDUNG**

POLYVINYL ACETAL-CONTAINING GRANULATE, METHOD FOR THE PRODUCTION AND THE UTILIZATION THEREOF

GRANULAT CONTENANT DU POLYACETAL DE VINYLE, SON PROCEDE DE PRODUCTION ET SON UTILISATION

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.08.2003 DE 10338546**
**19.08.2003 DE 20312936 U**
**28.05.2004 DE 102004026747**

(43) Veröffentlichungstag der Anmeldung:
**24.05.2006 Patentblatt 2006/21**

(73) Patentinhaber: **Kuraray Europe GmbH**
**65926 Frankfurt am Main (DE)**

(72) Erfinder:
- **STEUER, Martin**
  **65853 Liederbach (DE)**
- **BUCAK, Bekir**
  **64569 Nauheim (DE)**
- **JONAS, Simon**
  **47807 Krefeld (DE)**
- **GUTWEILER, Matthias**
  **65597 Hünfelden (DE)**
- **KÖHNEN, Sven**
  **65527 Niedernhausen (DE)**

(74) Vertreter: **Kisters, Michael Marcus et al**
**Kuraray Europe GmbH**
**Patents and Trademarks**
**Mülheimer Strasse 26**
**53840 Troisdorf (DE)**

(56) Entgegenhaltungen:
**WO-A-03/020823**
**GB-A- 1 221 244**
**US-A- 4 130 539**
**US-A- 4 323 492**
**US-A- 5 914 368**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 658 323 B1

## Beschreibung

Die vorliegende Erfindung betrifft ein Verfahren zur Herstellung eines Granulats enthaltend mindestens ein Polyvinylacetal, das durch das Verfahren erhältliche Granulat sowie seine Verwendung.

Polyvinylacetale, welche üblicherweise durch Acetalisierung der korrespondierenden Polyvinylalkohole erhalten werden, sind seit langem bekannt und werden u. a. als Bindemittel für wässrige und/oder organische Lösungen eingesetzt. Weiterhin sind auch Folien aus Polyvinylacetal, insbesondere aus Polyvinylbutyral, als Verbindungsschicht in Verbund-Sicherheitsgläsern von großer Bedeutung. Da jedoch die Verarbeitung der Polyvinylacetale in der Regel nicht am Ort ihrer Synthese, sondern an anderer Stelle erfolgt, müssen sie vorher gelagert und an die Stelle der Weiterverarbeitung transportiert werden. Hierfür ist eine möglichst platzsparende und leicht handhabbare Form wünschenswert. Üblicherweise wird daher das aus der Synthese anfallende Polyvinylacetal kompaktiert, um auf diese Weise seine Schüttdichte zu erhöhen und gleichzeitig seine Oberfläche zu vergrößern, welches insbesondere ein späteres Auflösen oder Aufschmelzen des Polyvinylacetals erleichtert.

Das auf diese Weise erhältliche Polyvinylacetal-Granulat weist jedoch einen beachtlichen Feinanteil, d. h. von Partikeln mit vergleichsweise kleiner Korngröße, auf, welche "stauben" und somit die Handhabung des Granulats erschweren. Bei der Weiterverarbeitung derartiger Granulate sind daher Vorkehrungen (Schutzhauben, Tragen von Staubschutzmasken) zu treffen, um ein möglichst sauberes Arbeiten mit dem Granulat zu gewährleisten und gleichzeitig eine Gesundheitsgefährdung und gegebenenfalls die Gefahr einer Staubexplosion zu vermeiden. Darüber hinaus ist dieses "Stauben" insbesondere beim Abmischen des Granulats mit weiteren Zusatzstoffen problematisch, da es die ohnehin schon bestehende Gefahr von Abwäge- und Dosierfehlern nochmals erhöht.

Ein weiterer Nachteil derartiger Granulate besteht darin, dass sie beim Auflösen zum Verklumpen neigen, welches die Auflösegeschwindigkeit der Granulate merklich verringert. Ferner sind aus technischer Sicht Polyvinylacetal-Granulate mit höherer Schüttdichte wünschenswert.

Einen ersten Ansatz zur Lösung dieser Probleme liefert die Druckschrift JP 04-258638 A, welche ein Verfahren zur Herstellung eines Polyvinylacetal-Granulats beschreibt, bei welchem man ein Polyvinylacetal-Harz zwischen zwei Rollen bei tiefen Temperaturen verpresst und anschließend auf die gewünschte Korngröße vermahlt. Durch diese Kompaktierung wird ein Granulat mit einer vergleichsweise höheren Schüttdichte erhalten, welches jedoch weiterhin einen beträchtlichen Feinanteil aufweist, sodass ein "Stauben" der Granulate weiterhin zu beklagen ist. Auch neigen sie beim Auflösen zum Verklumpen. Des Weiteren ist dieses Verfahren relativ aufwendig und somit teuer. In diesem Zusammenhang ist festzuhalten, dass die freigesetzten Stäube ein sicherheitstechnisches Risiko darstellen, sodass Vorrichtungen notwendig sind, diese Stäube abzufangen.

Die Druckschrift DE-OS 196 50 848 beschreibt ein Recyclingverfahren, wobei Kunststoffe mit einem Polyvinylbutyralgehalt aufgearbeitet werden. Hierbei werden Laminate extrudiert, die den aufbereiteten Kunststoff enthalten. Diese Druckschrift beschreibt jedoch nicht die Herstellung eines Granulats, das Polyvinylbutyral enthält.

US 4,323,492 und GB 1221244 betreffen die Herstellung von Polyvinylalkohol-Granulat bzw.. Partikeln aus einem geschäumten thermoplastischen Polymer aus wässrigen Dispersionen. Weiterhin ist aus US 4,130,539 die Ausfällung eines polymeren Granulats aus einer organischen Lösung bzw. Dispersion durch Wasserzugabe bekannt. Die Herstellung von Granulaten aus Dispersionen oder Lösungen erfordert aufwändige Prozessschritte zur Bereitung der Dispersion und anschießende Ausfällung und Trocknung des Granulats.

US 5,914,368 offenbart die Herstellung eines Polyvinylacetals aus Polyvinylalkohol und Stärke durch säurekatalysierte Umsetzung in einem Extruder. Die Granulation eines bereits hergestellten Polyvinylacetals ist dieser Schrfit nicht zu entnehmen.

In Anbetracht des Standes der Technik war es daher Aufgabe der vorliegenden Erfindung, Polyvinylacetalhaltige Granulate mit einer höheren Schüttdichte zugänglich zu machen, um auf diese Weise eine weitere Volumenreduzierung der Verpackungseinheit erreichen zu können. Dabei sollten die Polyvinylacetal-haltigen Granulate gleichzeitig eine erhöhte Auflösegeschwindigkeit in den für Polyvinylacetal gängigen Lösungsmitteln, insbesondere in aliphatischen Alkoholen und Mischungen dieser Komponenten, sowohl bei tiefen als auch bei hohen Temperaturen, aufweisen. Das aus dem Stand der Technik bekannte Verklumpen des Granulats während des Auflösevorgangs sollte bestmöglich vermieden werden.

Eine weitere Aufgabe der vorliegenden Erfindung bestand in der Bereitstellung eines vergleichsweise leichter handhabbaren Polyvinylacetal-haltigen Granulats, welches insbesondere einen möglichst geringen Feinanteil aufweisen sollte.

Eine Aufgabe der vorliegenden Erfindung war auch darin zu erblicken, ein Verfahren zur Herstellung des erfindungsgemäßen Granulats anzugeben, welches einfach und kostengünstig durchführbar ist.

Das Verfahren sollte insbesondere einen besonders gleichmäßigen Verlauf gewährleisten, wobei eine besonders hohe Produktqualität erzielt werden soll.

Eine Aufgabe der vorliegenden Erfindung war auch darin zu erblicken, ein Verfahren zur Herstellung von Granulaten anzugeben, welches auf einfache Art und Weise und mit bekannten Vorrichtungen großtechnisch durchführbar ist. Hierbei sollte insbesondere bei der Herstellung der Granulate auf Vorrichtungen verzichtetet werden können, um möglicherweise freigesetzte Stäube abzufangen.

Darüber hinaus war es Ziel der vorliegenden Erfindung Verfahren zur Herstellung von Polyvinylacetal-enthaltenden Granulaten anzugeben, welche mit sehr hohen Geschwindigkeiten durchgeführt werden können.

Weiterhin war es eine Aufgabe der vorliegenden Erfindung ein Verfahren anzugeben, welches im Hinblick auf die zu granulierenden Bestandteile möglichst schonend verfährt. So sollten insbesondere abbaubedingte Schädigungen, die beim Granulieren von Polyvinylacetalen entstehen können, verringert werden.

Eine weitere Aufgabe der vorliegenden Erfindung bestand darin, die Verarbeitung der Polyvinylacetal-haltigen Granulate weiter zu rationalisieren. Insbesondere sollten Wege gefunden werden, die Gefahr von Abwäge- und Dosierfehlern während dem Abmischen des Polyvinylacetal-haltigen Granulats mit weiteren Zusatzstoffen bestmöglich auszuschließen.

Ferner war es ein Ziel der vorliegenden Erfindung, besonders geeignete Anwendungsgebiete der erfindungsgemäßen Granulate aufzuzeigen.

Gelöst werden diese sowie weitere nicht explizit genannte Aufgaben, die jedoch aus den hierin diskutierten Zusammenhängen ohne weiteres ableitbar oder erschließbar sind, durch ein Verfahren mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt. Die durch das erfindungsgemäße Verfahren erhältlichen Granulate werden durch die Produktansprüche beansprucht und die Ansprüche der Verwendungskategorie beschreiben besonders vorteilhafte Einsatzgebiete der erfindungsgemäßen Granulate.

Dadurch, dass man ein Verfahren zur Herstellung eines Granulats enthaltend mindestens ein Polyvinylacetal bereitstellt, welches dadurch gekennzeichnet ist, dass man eine Polyvinylacetal enthaltende Zusammensetzung in den schmelzflüssigen Zustand überführt und entsprechend der gewünschten Korngröße granuliert, gelingt es auf nicht ohne weiteres vorhersehbare Weise, ein Granulat mit einer höheren Schüttdichte zugänglich zu machen, welches eine vorteilhafte weitere Volumenreduzierung der Verpackungseinheit ermöglicht. Gleichzeitig zeichnet sich das erfindungsgemäße Granulat gegenüber dem Stand der Technik durch eine erhöhte Auflösegeschwindigkeit in allen gängigen Lösungsmitteln, insbesondere in aliphatischen Alkoholen und Mischungen dieser Komponenten, sowohl bei tiefen als auch bei hohen Temperaturen, aus. Ein Verklumpen des Granulats während des Auflösevorgangs wird dabei nicht beobachtet.

Zugleich ergeben sich aus der erfindungsgemäßen Lehre eine Reihe weiterer Vorteile. Hierzu gehören u. a.:

⇒ Das erfindungsgemäße Granulat hat eine vergleichsweise enge Korngrößenverteilung. Insbesondere weist es - falls überhaupt - einen deutlich geringeren Feinanteil auf. Daher kann beim Handhaben/Verarbeiten des erfindungsgemäßen Granulats in der Regel auf den Einsatz von Staubschutzvorkehrungen und/oder das Treffen weiterer Staubschutzmaßnahmen, insbesondere auf das Tragen von Staubschutzmasken, verzichtet werden.

⇒ Das erfindungsgemäße Granulat schmilzt gleichmäßiger auf als herkömmliches Polyvinylacetal. Hieraus ergeben sich insbesondere bei der Extrusion deutliche Vorteile, da wesentlich geringere Druckschwankungen auftreten, wenn das erfindungsgemäße Granulat eingesetzt wird. Dies ermöglicht die Herstellung vergleichsweise homogenerer Formkörper mit weniger Fehlstellen (Stippen u. ä.).

⇒ Das erfindungsgemäße Granulat zeichnet sich im Vergleich mit herkömmlich kompaktiertem Material durch eine höhere Härte aus. Infolgedessen wird nach mechanischer Beanspruchung ein vergleichsweise geringerer Abrieb beobachtet.

⇒ Das erfindungsgemäß erhältliche Granulat zeigt eine hohe Auflösegeschwindigkeit in allen gängigen Lösungsmitteln, insbesondere in aliphatischen Alkoholen und Mischungen dieser Komponenten, sowohl bei tiefen als auch bei hohen Temperaturen, aus. Ein Verklumpen des Granulats während des Auflösevorgangs wird dabei nicht beobachtet.

⇒ Das erfindungsgemäße Verfahren zur Herstellung des Polyvinylacetal enthaltenden Granulats ist einfach und kostengünstig durchführbar. Gleichzeitig zeichnet sich das erfindungsgemäße Verfahren gegenüber dem Stand der Technik durch eine hohe Geschwindigkeit aus.

⇒ Das erfindungsgemäße Verfahren zur Herstellung des Polyvinylacetal enthaltenden Granulats zeichnet sich insbesondere durch einen besonders gleichmäßigen und störungsfreien Ablauf aus. So können insbesondere Störungen, beispielsweise Druckschwankungen bei der Extrusion usw. vermieden werden. Hierdurch wird das Produkt nur sehr gering belastet und zeichnet sich daher durch eine besonders hohe Homogenität, einen besonders geringen Gelbwert und eine hohe Löslichkeit aus.

⇒ Des Weiteren kann die Zusammensetzung, die mindestens ein Polyvinylacetal umfasst, besonders schnell geschmolzen werden, wobei das Polyvinylacetal nur sehr kurz einer Erwärmung ausgesetzt wird. Hierdurch kann ein Abbau und die damit verbundenen Nachteile, beispielsweise ein hoher Gelbwert, eine hohe Polydispersität usw. des Granulats vermieden werden.

⇒ Das erfindungsgemäße Verfahren zur Herstellung des Polyvinylacetal enthaltenden Granulats ist auf einfache Art und Weise großtechnisch und kostengünstig durchführbar. Bei der Durchführung des erfindungsgemäßen Verfahrens können bei Bedarf weitere Zusatzstoffe direkt mit dem mindestens einen Polyvinylacetal zu einem Granulat verarbeitet werden, sodass bei der Anwendung des Granulats eine Zugabe der betreffenden weiteren Zusatzstoffe nicht mehr erforderlich ist. Auf diese Weise werden unnötige Arbeitsschritte vermieden und eventuelle Dosier- oder Abwägefehler ausgeschlossen. Das auf diese Weise erhältliche Granulat zeichnet sich durch eine sehr hohe Homogenität aus.

Das erfindungsgemäße Granulat ist nach einem Verfahren erhältlich, bei welchem man mindestens eine Polyvinylacetal enthaltende Zusammensetzung in den schmelzflüssigen Zustand überführt und entsprechend der gewünschten Korngröße granuliert. Zweckmäßigerweise wird dabei so verfahren, dass man mindestens ein Polyvinylacetal in den schmelzflüssigen Zustand überführt, extrudiert und entsprechend der gewünschten Korngröße granuliert.

Die Begriffe "Granulat", "schmelzflüssiger Zustand" und "Extrusion" sind aus dem Stand der Technik bekannt. "Granulate" bezeichnen durch Granulierung hergestellte Teilchen und umfassen u. a. auch die im Stand der Technik als "Mikrogranulate" bezeichneten Teilchen. Dabei kann die Granulierung erfindungsgemäß auf an sich bekannte Weise, vorzugsweise durch Heißabschlag (insbesondere durch exzentrische Granulierung, Messerwalzen-Granulierung, Wasserring-Granulierung oder Unterwasser-Granulierung) oder Kaltabschlag (insbesondere durch Stranggranulierung oder Bandgranulierung) erfolgen. Diese Verfahren sind aus dem Stand der Technik hinlänglich bekannt.

Beim Heißabschlag, gelegentlich auch als Kopfgranulierung bezeichnet, wird eine Polymerschmelze in Lochplatten zu Strängen geformt, die unmittelbar beim Austritt aus der Lochplatte auf die gewünschte Kornlänge geschnitten und abgekühlt werden. Dabei wird üblicherweise in Luft, einer Luft-Wasser-Verwirbelung oder unter Wasser gearbeitet. Bei einem wenig zum Kleben neigenden Kunststoff kann die Abkühlung auch in der Luft erfolgen, ansonsten wird hierzu üblicherweise Wasser verwendet. Üblicherweise wird danach eine Trocknung angeschlossen, obwohl diese erfindungsgemäß nicht unbedingt erforderlich ist, da das Polyvinylacetal in der Regel nicht auffeuchtet. Im Rahmen einer ganz besonders bevorzugten Ausführungsform der vorliegenden Erfindung wird das erfindungsgemäße Granulat daher ohne Trocknung direkt weiterverarbeitet oder verpackt.

Beim Kaltgranulieren werden Stränge oder Bänder extrudiert, in einem Wasserbad abgekühlt und in Strang- oder Bandgranulatoren zu Granulaten geschnitten. Beim Bandgranulieren müssen die Bänder zusätzlich zum Querschnitt auch in Längsrichtung geschnitten werden. Üblicherweise wird eine Trocknung angeschlossen, obwohl diese erfindungsgemäß nicht unbedingt erforderlich ist, da das Polyvinylacetal in der Regel nicht auffeuchtet. Im Rahmen einer ganz besonders bevorzugten Ausführungsform der vorliegenden Erfindung wird das erfindungsgemäße Granulat daher ohne Trocknung direkt weiterverarbeitet oder verpackt.

Die Gestalt des Granulats ist erfindungsgemäß von untergeordneter Bedeutung. Prinzipiell ist jede erdenkliche Form möglich. Jedoch besitzt es vorzugsweise eine längliche Gestalt, d. h. seine Längsausdehnung ist größer als seine Breite und seine Höhe (karthesisches Koordinatensystem). Ein für die Zwecke der vorliegenden Erfindung besonders geeignetes Granulat weist eine Länge im Bereich von 0,1 mm bis 5,0 cm, zweckmäßigerweise im Bereich von 0,5 mm und 1,0 cm, vorteilhafterweise im Bereich von 0,5 mm bis 5,0 mm, insbesondere im Bereich von 0,5 mm bis 3,0 mm, auf. Die Breite des Granulats liegt vorzugsweise im Bereich von 0,1 mm bis 5,0 cm, zweckmäßigerweise im Bereich von 0,5 mm und 1,0 cm, vorteilhafterweise im Bereich von 0,5 mm bis 5,0 mm, insbesondere im Bereich von 0,5 mm bis 3,0 mm. Die Höhe des Granulats liegt vorzugsweise im Bereich von 0,1 mm bis 5,0 cm, zweckmäßigerweise im Bereich von 0,5 mm und 1,0 cm, vorteilhafterweise im Bereich von 0,5 mm bis 5,0 mm, insbesondere im Bereich von 0,5 mm bis 3,0 mm. Dabei ist das Verhältnis von Breite zu Höhe vorzugsweise im Bereich von 10:1 bis 1:10, zweckmäßigerweise im Bereich von 5:1 bis 1:5, insbesondere 1:1.

Der Begriff "schmelzflüssiger Zustand" bezeichnet den Zustand, beim welchem das Polyvinylacetal thermoplastisch verarbeitbar ist. Im Rahmen der vorliegenden Erfindung wird das Polyvinylacetal vorzugsweise durch Erwärmen auf 100 bis 340 °C, insbesondere auf 130 bis 200 °C, in den schmelzflüssigen Zustand überführt. Weiterhin wird zur Überführung in den schmelzflüssigen Zustand zweckmäßigerweise ein Ein- oder Zweischneckenextruder, ein Mehrwellenkneter, ein Kneter, ein Walzwerk und/oder ein Kalander eingesetzt.

Das Verfahren der "Extrusion" bezeichnet ein auch als "Strangpressen" bezeichnetes Verfahren zur Herstellung von Rohren, Drähten, Profilen, Schläuchen usw. aus thermoplastischen Kunststoffen, wie Polyvinylacetal. Dabei erfolgt die Extrusion in Extrudern, die meist als Schnecken-, seltener als Kolbenextruder ausgelegt sind. Sie werden durch Einfülltrichter mit dem Thermoplasten sowie gegebenenfalls weiteren Zusatzstoffen beschickt, dann wird das Material erwärmt, homogenisiert und durch die formgebende Düse gepresst.

Extruder existieren in verschiedenen Varianten, so unterscheidet man beispielsweise je nach der Zahl der Förderschnecken Ein- und Mehrschneckenextruder. Zu den im Rahmen der vorliegenden Erfindung besonders bevorzugten Extrudern gehören Ein- oder Zweischneckenextruder, Mehrwellenkneter, Kneter, Walzwerke und Kalander.

Für weitere Details zu den vorstehend genannten Fachbegriffen wird auf die gängige Fachliteratur, insbesondere auf Römpp's Chemielexikon, 5. Auflage und auf Saechtling, Kunststofftaschenbuch, 27. Ausgabe sowie die dort angegebenen Literaturstellen verwiesen.

Gemäß einer ersten ganz besonders bevorzugten Ausführungsform der vorliegenden Erfindung wird zumindest ein Teil der Polyvinylacetal enthaltenden Zusammensetzung, vorzugsweise mindestens 70 Gew.-%, besonders bevorzugt mindestens 90 Gew.-% und ganz besonders bevorzugt 100 Gew.-%, bezogen auf das Gesamtgewicht der in den Extruder überführten Zusammensetzung, über mindestens eine Seitenstromzuführung in einen Extruder überführt. Der Haupteinzug, über den üblich Polymere in einen Extruder zugegeben werden, bleibt vorzugsweise leer. Der Haupteinzug befindet sich üblich bei einem L/D-Verhältnis von bis zu 5. Hierdurch können flüchtige Bestandteile über den freien Zugang aus dem Extruder entweichen.

Das L/D-Verhältnis ist in der Fachwelt bekannt. Hierbei steht L für die Länge der Schnecke und D für den Durchmesser einer Schnecke. Extruder mit ähnlichen L/D-Verhältnissen weisen im Allgemeinen ähnliche Extrusionseigenschaften auf. Daher ist die Angabe des L/D-Verhältnisses üblich, wobei im Allgemeinen zusätzlich der Durchmesser D der Schnecke angegeben werden. Die Längenangabe "bei einem L/D-Verhältnis von bis zu 5" ergibt sich somit aus der Multiplikation des angegebenen L/D-Verhältnisses von 5 mit dem ebenfalls bekannten Schneckendurchmesser D. Bei einem Schneckendurchmesser von 30 mm bedeutet die Angabe "bei einem L/D-Verhältnis von bis zu 5", dass der Haupteinzug in einem Bereich von 0 mm bis zu einer Länge von 150 mm, bezogen auf den Anfangspunkt der Schnecke, liegt. Beträgt der Durchmesser der 10 mm, liegt der Haupteinzug innerhalb eines Bereiches von 0 bis 50 mm. Da der Haupteinzug eine Ausdehnung über Länge hat, ist festzuhalten, dass sich diese Angaben auf den Punkt des Haupteinzugs beziehen, der dem Anfangspunkt am nächsten ist.

Die Seitenstromzuführung ist in der Fachwelt bekannt, wobei üblich Additive über diesen Zugang in den Extruder einer Schmelze beigemischt werden. Die Zufuhr kann unter anderem über eine an den Extruder angeschlossene Seitenstromdosierung, die mindestens eine Förderschnecke aufweisen kann, erfolgen. Hierbei kann die Seitenstromdosierung beispielsweise ein oder zwei Förderschnecken aufweisen.

Vorzugsweise wird die Seitenstromdosierung gekühlt, sodass innerhalb dieser Einrichtung keine Schmelze entsteht, sondern die Polyvinylacetal enthaltende Zusammensetzung beispielsweise als Pulver in den Hauptextruder gegeben wird. Vorzugsweise ist die Temperatur in der Seitenstromdosierung kleiner oder gleich der Glasübergangstemperatur des Polyvinylacetals bzw. der Zusammensetzung, die mindestens ein Polyvinylacetal umfasst. Vorzugsweise ist die Temperatur in der Seitenstromdosierung kleiner oder gleich 100°C, insbesondere kleiner oder gleich 80°C und besonders bevorzugt kleiner oder gleich 50°C.

Gemäß einem besonderen Aspekt ist der Schnecken-Durchmesser der Seitenstromdosierung kleiner als der Schnecken-Durchmesser des Extruders,
wobei das Verhältnis von Schnecken-Durchmesser des Extruders zum Schnecken-Durchmesser der Seitenstromdosierung vorzugsweise im Bereich von 1,1:1 1 bis 10:1, besonders bevorzugt 2:1 bis 5:1 liegt.

Gemäß einer weiteren ganz besonders bevorzugten Ausführungsform der vorliegenden Erfindung kann man den Bereich des Extruders vom Haupteinzug bis zu einer Länge von mindestens 15* L/D, bevorzugt bis zu einer Länge von mindestens 20*L/D kühlen, um die zuvor dargelegten Aufgaben zu lösen. Hierbei kann die Kühlung über die Kühlung des Mantels erfolgen.

Die Bedeutung des L/D-Verhältnisses wurde zuvor dargelegt. Bei einem Schneckendurchmesser von 30 mm bedeutet die Angabe "bis zu einer Länge von mindestens 15* L/D", dass der Bereich des Extruders vom Haupteinzug bis zu einer Länge von mindestens 450 mm gekühlt wird. Beträgt der Durchmesser der 10 mm, wird der Bereich vom Haupteinzug bis zu einer Länge von mindestens 150 mm gekühlt. Da der Haupteinzug eine Ausdehnung über Länge hat, ist festzuhalten, dass sich diese Angaben auf den Punkt des Haupteinzugs beziehen, der dem Anfangspunkt am nächsten ist.

Gemäß noch einer weiteren ganz besonders bevorzugten Ausführungsform der vorliegenden Erfindung kann man mindestens eine der Schnecken, vorzugsweise alle Schnecken des Extruders kühlen, um die zuvor dargelegten Aufgaben zu lösen.

Vorzugsweise wird hierbei die Schnecke über Bereich des Extruders vom Haupteinzug bis zu einer Länge von mindestens 5* L/D, besonders bevorzugt mindestens 10* L/D gekühlt. Die Kühlung von Schnecken ist in der Fachwelt an sich bekannt.

Die Drehzahl des Extruders des Hauptstroms und, gegebenenfalls, der mindestens einen Seitenstromdosierung können vom Fachmann leicht bestimmt und angepasst werden. Die Drehzahl des Extruders des Hauptstroms liegt vorzugsweise im Bereich von 50 U/min bis 500 U/min, besonders bevorzugt im Bereich von 60 U/min bis 400 U/min.

Gemäß einem besonderen Aspekt der vorliegenden Erfindung kann hierbei die Temperatur beim Überführen in den schmelzflüssigen Zustand geändert werden, wobei vorzugsweise eine Temperaturerhöhung durchgeführt werden

kann, um beispielsweise flüchtige Bestandteile aus der Mischung zu entfernen. Hierbei kann beispielsweise die Temperatur stufenförmig erhöht werden, um ein schonendes und energiesparendes Entfernen dieser Stoffe zu erzielen. Vorzugsweise ist die Temperatur beispielsweise bei der Zuführung in den Extruder kleiner oder gleich der Glasübergangstemperatur des Polyvinylacetals oder der Zusammensetzung, die mindestens ein Polyvinylacetal umfasst. Gemäß einem besonderen Aspekt kann die Temperatur im Bereich von 40 °C bis 120 °C, vorzugsweise 80 °C bis 120 °C liegen. Diese Temperatur kann anschließend im Hauptextruder auf einen Bereich von 100 °C bis 220 °C, vorzugsweise 130 °C bis 220°C erhöht werden, wobei diese Temperaturerhöhung über mehrere Stufen erfolgen kann. Flüchtige Stoffe können auf bekannte Weise beispielsweise Entgasen aus der Zusammensetzung entfernt werden.

Des Weiteren werden bei bevorzugten Varianten des Verfahrens einige Zonen des Extruders nicht benötigt, wobei diese ausgebaut werden können. Hierdurch ergeben sich weitere Betriebsvorteile.

In diesem Zusammenhang bedeutet der Begriff "Überführen in den schmelzflüssigen Zustand" den Vorgang der beim Erhitzen der Zusammensetzung beginnt und mit dem Granulieren der Zusammensetzung endet. Somit umschließt dieser Begriff auch Phasen, in denen eine Homogenisierung der schmelzflüssigen Zusammensetzung erfolgt.

Das erfindungsgemäße Granulat zeichnet sich durch eine hohe Einheitlichkeit und Homogenität aus und weist insbesondere eine vergleichsweise enge Korngrößenverteilung mit einem vergleichsweise geringen Feinanteil auf. Methoden zur Ermittlung der Korngrößenverteilung sind dem Fachmann bekannt. Sie erfolgt erfindungsgemäß vorzugsweise durch Bestimmung von $d_z$-Werten (z = 1 bis 99), welche angeben, dass z Gew.-% des Granulats einen Durchmesser kleiner $d_z$ aufweisen. Der Wert $d_{100}$ bezeichnet den maximalen Durchmesser der Granulatteilchen. Für ideal kugelförmige Teilchen können diese Werte beispielsweise mittels Siebanalyse ermittelt werden.

Es ist dem Fachmann offensichtlich, dass die Korngrößenverteilung von der Symmetrie der Teilchen und der spezifischen Gestalt der Granulate abhängt. Bei nicht ideal kugelförmigen Granulaten wird daher die Korngrößenverteilung bzgl. jeder Hauptachse des Granulats separat ermittelt, wobei sich die Charakterisierung der Homogenität der Granulate in Richtung der größten Ausdehnung der Granulate (längste Hauptachse) im Rahmen der Erfindung ganz besonders bewährt hat.

Erfindungsgemäß ist der Quotient $d_{10}/d_{100}$ vorzugsweise größer 0,2, zweckmäßigerweise größer 0,5, bevorzugt größer 0,75, besonders bevorzugt größer 0,85, ganz besonders bevorzugt größer 0,90, günstigerweise größer 0,95, insbesondere größer 0,99. Der Quotient $d_{50}/d_{100}$ ist vorliegend vorzugsweise größer 0,2, zweckmäßigerweise größer 0,5, bevorzugt größer 0,75, besonders bevorzugt größer 0,85, ganz besonders bevorzugt größer 0,90, günstigerweise größer 0,95, insbesondere größer 0,99. Der Quotient $d_{50}/d_{90}$ ist vorliegend vorzugsweise größer 0,70, zweckmäßigerweise größer 0,75, bevorzugt größer 0,80, besonders bevorzugt größer 0,85, ganz besonders bevorzugt größer 0,90, günstigerweise größer 0,95, insbesondere größer 0,99.

Gemäß einer besonders bevorzugten Ausführungsform der vorliegenden Erfindung setzt man während der Extrusion ein Treibmittel zu. Für diese Zwecke ganz besonders geeignete Treibmittel sind Substanzen, welche unter den gewählten Bedingungen mindestens ein Gas, vorzugsweise Stickstoff, Kohlendioxid, eine unter den Extrusionsbedingungen gasförmige organische Verbindung und/oder Wasser, freisetzen. Hierzu gehören insbesondere AzoVerbindungen, wie ggf. aktiviertes Azodicarbonsäurediamid (155-215 °C), N-Nitrosoverbindungen, wie Dinitrosopentamethylentetramin (195 °C), Sulfonylhydrazide, wie p-Toluolsulfohydrazid (155-165 °C), 4,4-Oxybis(benzolsulfonsäurehydrazid (145-285 °C), sowie Lösungsmittel mit entsprechend niedrigen Siedepunkten, wie Wasser. Erfindungsgemäß besonders geeignete Treibmittel umfassen weiterhin 2,4,6-Trihydrazino-1,3,5-triazin (245-285 °C), p-Toluolsulfonylsemicarbazid (226-235 °C), 5-Phenyl-tetrazol (240-250 °C) und Natriumhydrogencarbonat/Zitronensäure (150-230 °C). Die Zersetzungstemperaturen der Treibmittel in Luft sind vorstehend in Klammer angegeben.

Durch das erfindungsgemäße Verfahren werden Granulate mit einer vergleichsweise höheren Schüttdichte zugänglich. Der Begriff der Schüttdichte bezeichnet in diesem Zusammenhang den Quotienten aus der Masse und dem eingenommenen Volumen des Granulats. Man bestimmt die Schüttdichte, indem man den betreffenden Stoff in einen Messkasten, Messbecher oder Messzylinder schüttet und das Gewicht feststellt. Für die Zwecke der Erfindung erfolgt dies gemäß der Norm DIN 543. Die Schüttdichte des Granulats gemäß DIN 543 ist dabei vorzugsweise größer 550 g/l, zweckmäßigerweise größer 600 g/l, vorteilhafterweise größer 650 g/l, bevorzugt größer 700 g/l, besonders bevorzugt größer 750 g/l, insbesondere größer 800 g/l.

Im Rahmen einer besonders bevorzugten Ausführungsform der vorliegenden Erfindung enthält das erfindungsgemäße Granulat, bezogen auf sein Gesamtgewicht, mindestens 50,0 Gew.-%, vorzugsweise mindestens 60,0 Gew. %, zweckmäßigerweise mindestens 75,0 Gew.-%, vorteilhafterweise mindestens 80,0 Gew.-%, insbesondere mindestens 90,0 Gew.-%, mindestens eines Polyvinylacetals.

Polyvinylacetale sind in der Fachwelt bekannt. Die erfindungsgemäß eingesetzten Polyvinylacetale werden durch Umsetzung mindestens eines Polymers (A) mit mindestens einer Verbindung (B) erhalten, wobei das Polymer (A) jeweils bezogen auf sein Gesamtgewicht die folgenden Struktureinheiten umfasst:

a.) 1,0 bis 100,0 Gew.-%, zweckmäßigerweise 1,0 bis 99,9 Gew.-% Struktureinheiten der Formel (1)

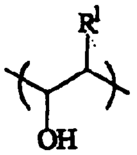

(1)

b.) 0 bis 99,0 Gew.-% Struktureinheiten der Formel (2)

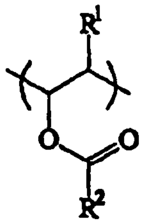

(2)

c.) 0 bis 70,0 Gew.-%, vorzugsweise 0,01 bis 70,0 Gew.-%, insbesondere 1,0 bis 60,0 Gew.-%, Struktureinheiten der Formel (3)

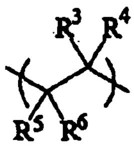

(3)

Dabei sind die jeweiligen Struktureinheiten natürlich voneinander verschieden, insbesondere umfasst im Rahmen der vorliegenden Erfindung die Struktureinheit der Formel (3) nicht die Struktureinheiten der Formel (1) oder (2).

Der Rest $R^1$ stellt jeweils unabhängig voneinander Wasserstoff oder Methyl, vorzugsweise Wasserstoff, dar.

Der Rest $R^2$ kennzeichnet Wasserstoff oder einen Alkylrest mit 1 bis 6 Kohlenstoffatomen, vorzugsweise einen Alkylrest mit 1 bis 6 Kohlenstoffatomen, zweckmäßigerweise eine Methyl-, Ethyl-, n-Propyl-, iso-Propyl-, n-Butyl-, sec-Butyl-, tert-Butyl-, n-Pentyl- oder eine n-Hexylgruppe, vorteilhafterweise eine Methyl- oder eine Ethylgruppe, insbesondere eine Methylgruppe.

Die Reste $R^3$, $R^4$, $R^5$ und $R^6$ sind jeweils unabhängig voneinander Reste mit einem Molekulargewicht im Bereich von 1 bis 500 g/mol, zweckmäßigerweise Wasserstoff, ein gegebenenfalls verzweigter, aliphatischer oder cycloaliphatischer Rest mit 1 bis 16 Kohlenstoffatomen, der gegebenenfalls eine oder mehrere Carbonsäure-, Carbonsäureanhydrid-, Carbonsäureester-, Carbonsäureamid- und/oder Sulfonsäuregruppen enthalten kann.

Besonders bevorzugte Struktureinheiten der Formel (3) leiten sich von geradkettigen oder verzweigten Olefinen mit 2 bis 18 Kohlenstoffatomen, (Meth)acrylsäure, Maleinsäure, Maleinsäureanhydrid, Fumarsäure, Itaconsäure, (Meth) acrylamiden und/oder Ethylensulfonsäure ab. Dabei haben sich Olefine, insbesondere solche mit einer endständigen C-C-Doppelbindung, die vorzugsweise 2 bis 6 Kohlenstoffatome aufweisen, insbesondere Ethylen, als ganz besonders günstig erwiesen. Weiterhin führen auch Struktureinheiten (3), die sich von Acrylamidopropenylsulfonsäure (AMPS) ableiten, erfindungsgemäß zu ganz besonders vorteilhaften Ergebnissen.

Die Gesamtanzahl an Struktureinheiten der Formel (2) ist vorzugsweise im Bereich von 0,1 bis 40 mol-%, zweckmäßigerweise im Bereich von 0,5 bis 25,0 mol-%, insbesondere im Bereich von 1,0 bis 15,0 mol-%, jeweils bezogen auf die Gesamtanzahl an Struktureinheiten der Formel (1) und (2). Dabei wird gemäß einer ersten bevorzugten Ausführungsform der vorliegenden Erfindung ein Polymer (A) eingesetzt, welches bezogen auf die Gesamtanzahl an Struktureinheiten der Formel (1) und (2) 1,0 bis 2,0 mol-% Struktureinheiten der Formel (2) enthält. Gemäß einer zweiten bevorzugten Ausführungsform der vorliegenden Erfindung wird ein Polymer (A) eingesetzt, welches bezogen auf die Gesamtanzahl an Struktureinheiten der Formel (1) und (2) 3,0 bis 7,0 mol-% Struktureinheiten der Formel (2) enthält. Gemäß einer dritten bevorzugten Ausführungsform der vorliegenden Erfindung wird ein Polymer (A) einsetzt, welches bezogen auf die Gesamtanzahl an Struktureinheiten der Formel (1) und (2) 10,0 bis 15,0 mol-% Struktureinheiten der Formel (2) enthält.

Gemäß einer weiteren besonders bevorzugten Ausführungsform der vorliegenden Erfindung enthält das Polymer (A), jeweils bezogen auf sein Gesamtgewicht, größer 50,0 Gew.-%, zweckmäßigerweise größer 60,0 Gew.-%, vorteilhafterweise größer 70,0 Gew.-%, insbesondere größer 80,0 Gew.-% an Struktureinheiten der Formel (1) und/oder

(2). Besonders vorteilhafte Ergebnisse können dabei mit Polymeren (A) erzielt werden, die, jeweils bezogen auf ihr Gesamtgewicht, größer 85,0 Gew.-%, zweckmäßigerweise größer 90,0 Gew.-%, vorteilhafterweise größer 95,0 Gew.-%, insbesondere größer 99,0 Gew.-% an Struktureinheiten der Formel (1) und/oder (2) enthalten. Dabei hat es sich erfindungsgemäß als ganz besonders günstig erwiesen, dass das Polymer (A1) mehr als 95,0 Gew.-% an Struktureinheiten der Formel (1) enthält.

Im Rahmen der vorliegenden Erfindung kann das Polymer (A) einen syndiotaktischen, isotaktischen und/oder ataktischen Kettenaufbau besitzen. Weiterhin kann es sowohl als statistisches Polymer/Copolymer als auch als Blockcopolymer vorliegen.

Die Viskosität des Polymers (A) ist erfindungsgemäß von untergeordneter Bedeutung, prinzipiell können sowohl niedermolekulare als auch hochmolekulare Polymere (A) eingesetzt werden. Dennoch hat es sich im Rahmen der vorliegenden Erfindung als ganz besonders günstig erwiesen, dass das Polymer (A) eine Viskosität im Bereich von 1,0 bis 70 mPas, vorzugsweise im Bereich von 2,0 bis 40 mPas, insbesondere im Bereich von 2,5 bis 35 mPas, aufweist (gemessen als 4 Gew.-%-ige wässrige Lösung nach Höppler bei 20°C, DIN 53015).

Die Herstellung der erfindungsgemäß zu verwendenden Polymere (A) kann auf an sich bekannte Weise in einem zweistufigen Verfahren erfolgen. In einem ersten Schritt wird der entsprechende Vinylester in einem geeigneten Lösungsmittel, in der Regel Wasser oder ein Alkohol, wie Methanol, Ethanol, Propanol und/oder Butanol, unter Verwendung eines geeigneten Radikalstarters, radikalisch polymerisiert. Wird die Polymerisation in der Gegenwart radikalisch copolymerisierbarer Monomere durchgeführt, so erhält man die entsprechenden Vinylester-Copolymere.

Das Vinylester(co)polymer wird dann in einem zweiten Schritt, üblicherweise durch Umesterung mit Methanol, verseift, wobei man den Verseifungsgrad auf an sich bekannte Weise, beispielsweise durch Variation der Katalysatorkonzentration, der Reaktionstemperatur und/oder der Reaktionszeit, gezielt einstellen kann. Für weitere Details wird auf die gängige Fachliteratur, insbesondere auf Ullmann's Encyclopedia of Industrial Chemistry, Fifth Edition on CD-Rom Wiley-VCH, 1997, Keyword: Poly(Vinyl Acetals) und die dort angegebenen Literaturstellen verwiesen.

Die Verbindung (B) genügt in diesem Zusammenhang der Formel (4)

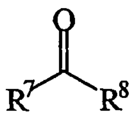

(4)

Die Reste $R^7$ und $R^8$ sind jeweils unabhängig voneinander Wasserstoff, COOH, COOM, eine Alkylgruppe mit 1 bis 10 Kohlenstoffatomen oder eine Arylgruppe mit 6 bis 12 Kohlenstoffatomen. Dabei können diese Alkyl- und Arylreste mit einer oder mehreren Carboxyl-, Hydroxyl-, Sulfonsäuregruppen und/oder Halogenatomen, wie Fluor, Chlor, Brom, Iod, substituiert sein. Der Rest M bezeichnet ein Metallkation oder ein gegebenenfalls alkyliertes Ammoniumkation. Besonders günstige Metallkationen leiten sich von Elementen des Periodensystems der Elemente (PSE) mit einer Elektronegativität kleiner 2,0, vorzugsweise kleiner 1,5, ab und umfassen insbesondere $Li^+$, $Na^+$, $K^+$, $Rb^+$, $Cs^+$, $Be^{2+}$, $Mg^{2+}$, $Ca^{2+}$, $Sr^{2+}$, $Ba^{2+}$ sowie $Al^{3+}$. Zu den für die Zwecke der vorliegenden Erfindung besonders zweckmäßigen Ammoniumkationen gehören $NH_4^+$, $H_3NCH_3^+$, $H_3NC_2H_5^+$, $H_3NC_3H_7^+$, $H_3NC_4H_9^+$, $H_2N(CH_3)_2^+$, $H_2N(C_2H_5)_2^+$, $H_2N(C_3H_7)_2^+$, $H_2N(C_4H_9)_2^+$, $HN(CH_3)_3^+$, $HN(C_2H_5)_3^+$, $HN(C_3H_7)_3^+$, $HN(C_4H_9)_3^+$, $N(CH_3)_4^+$, $N(C_2H_5)_4^+$, $N(C_3H_7)_4^+$ und $N(C_4H_9)_4^+$.

Für die Zwecke der vorliegenden Erfindung ganz besonders bevorzugte Verbindungen (B) umfassen Formaldehyd, Acetaldehyd, Propionaldehyd, n-Butyraldehyd, iso-Butyraldehyd, 2-Ethoxybutyraldehyd, Paraldehyd, 1,3,5-Trioxan, Capronaldehyd, 2-Ethylhexanal, Pelargonaldehyd, 3,5,5-Trimethylhexanal, 2-Formyl-benzoesulfonsäure, Aceton, Ethylmethylketon, Butylethylketon und/oder Ethylhexylketon. Gemäß einer weiteren bevorzugten Ausführungsform wird Glyoxylsäure HCO-COOH als Verbindung (B) verwendet.

Im Rahmen der vorliegenden Erfindung hat sich der Einsatz von Aldehyden, d. h. von Verbindungen der Formel (4) mit $R^7$ = Wasserstoff und $R^8$ = Wasserstoff; eine Methyl-, Ethyl-, n-Propyl- oder eine iso-Propylgruppe, vorzugsweise von Formaldehyd, Acetaldehyd und/oder n-Butyraldehyd, insbesondere von n-Butyraldehyd, ganz besonders bewährt.

Die Mengen an Verbindung (B) können im Rahmen der vorliegenden Erfindung prinzipiell beliebig gewählt werden. Zweckmäßigerweise werden zwischen 0,1 und 300 Gew.-Teile, vorzugsweise zwischen 25 und 150 Gew.-Teile, zweckmäßigerweise 49 bis 99 Gew.-Teile, insbesondere zwischen 50 und 99 Gew.-Teile, Verbindung (B), jeweils bezogen auf 100 Gew.-Teile Polymer (A), eingesetzt.

Gemäß einer besonders bevorzugten Ausführungsform der vorliegenden Erfindung ist das Polyvinylacetal durch ein Verfahren erhältlich, bei dem man mindestens ein Polymer (A) mit mindestens einer Verbindung (B) der Formel (4) und mindestens einem Monosaccharid, mindestens einem Oligosaccharid, oder einer Mischung dieser Komponenten umsetzt, wobei das Monosaccharid, das Oligosaccharid bzw. die Mischung, jeweils bezogen auf sein bzw. ihr Gesamtgewicht, mindestens 20 Gew.-% Glucose und/oder Glucoseeinheiten enthält. Diese Polyvinylacetale eignen sich besonders als Bindemittel, insbesondere für die Herstellung von Druckfarben- und Lackformulierungen, da sie gegenüber

dem Stand der Technik, insbesondere im Vergleich mit den entsprechenden Homo-Acetalen, eine deutlich niedrigere Lösungsviskosität, eine auch ohne die Viskosität erhöhende Zusätze signifikant verbesserte Viskositätsstabilität (konstant niedriges Viskositätsniveau) und ein erhöhtes Pigmentbindevermögen aufweisen. Druckfarben- und Lackformulierungen, welche derartige Polyvinylacetale als Bindemittel enthalten, zeigen weiterhin einen höheren Glanz als herkömmliche Formulierungen. Ferner weisen derartige Polyvinylacetale eine verbesserte Substrathaftung, insbesondere auf Glasoberflächen, auf.

Die Begriffe Monosaccharide, Oligosaccharide und Polysaccharide sind aus der Fachliteratur bestens bekannt. Wertvolle Hinweise kann der Fachmann insbesondere dem Lehrbuch H. Beyer *Lehrbuch der Organischen Chemie* Beyer, Walter - 22. überarbeitete und aktualisierte Auflage; von W. Walter; Stuttgart; Hirzel 1991 - Kapitel 4 Kohlenhydrate S. 425 - 468 entnehmen, auf dessen Offenbarung hiermit explizit bezug genommen wird.

Monosaccharide bezeichnen im Sinne der vorliegenden Erfindung einfache, vorzugsweise reduzierende, Zukker, welche vorzugsweise der Summenformel $C_nH_{2n}O_n$ genügen, wobei n vorzugsweise eine ganze Zahl im Bereich von 3 bis 6, zweckmäßigerweise im Bereich von 4 bis 6, bevorzugt 5 oder 6, insbesondere 6, ist. Sie weisen vorzugsweise eine unverzweigte Kohlenstoffkette auf. Weiterhin umfassen die Monosaccharide auch die zahlreichen natürlichen Zukker, in denen Wasserstoff und Sauerstoff nicht im Verhältnis des Wassers auftreten.

Erfindungsgemäß umfasst der Begriff "Monosaccharide" sowohl Aldehydzucker, die sogenannten Aldosen, als auch Ketozucker, die sogenannten Ketosen, wobei Aldosen erfindungsgemäß ganz besonders bevorzugt eingesetzt werden.

Die Monosaccharide können prinzipiell sowohl die D-Konfiguration als auch die L-Konfiguration aufweisen. Dennoch haben sich Monosaccharide der D-Reihe für die Zwecke der vorliegenden Erfindung ganz besonders bewährt.

Erfindungsgemäß besonders geeignete Monosaccharide umfassen u. a. die folgenden Aldosen:

D-Glycerinaldehyd, L-Glycerinaldehyd, D-Erythrose, L-Erythrose, D-Threose, L-Threose, D-Ribose, L-Ribose, D-Arabinose, L-Arabinose, D-Xylose, L-Xylose, D-Lyxose, L-Lyxose, D-Allose, L-Allose, D-Altrose, L-Altrose, D-Glucose, L-Glucose, D-Mannose, L-Mannose, D-Gulose, L-Gulose, D-Idose, L-Idose, D-Galactose, L-Galactose, D-Talose und L-Talose

sowie die folgenden Hexosen:

1,3-Dihydroxyaceton, D-Erythrulose, L-Erythrulose, D-Ribulose, L-Ribulose, D-Xylulose, L-Xylulose, D-Psicose, L-Psicose, D-Fructose, L-Fructose, D-Sorbose, L-Sorbose, D-Tagatose und L-Tagatose.

Dabei hat sich der Einsatz von D-Glucose und/oder L-Glucose als ganz besonders günstig erwiesen.

Oligosaccharide bezeichnen im Sinne der vorliegenden Erfindung Verbindungen, welche durch acetalartige Verknüpfung von 2 bis 6 Monosacchariden, vorzugsweise den vorstehend genannten Verbindungen, erhältlich sind. Sie umfassen daher Disaccharide, Trisaccharide, Tetrasaccharide, Pentasaccharide und Hexasaccharide. Dabei können die einzelnen Monosaccharide sowohl über die α-Form als auch über die β-Form miteinander verknüpft sein.

Erfindungsgemäß ganz besonders geeignete Oligosaccharide umfassen u. a. die folgenden Disaccharide:

Rohrzucker (Saccharose, β-D-Fructofuranosyl-α-D-glucopyranosid),
Milchzucker (Lactose, 4-O-(α-D-Galactopyranosyl)-D-glucopyranose und/oder 4-O-(β-D-Galactopyranosyl)-D-glucopyranose),
Allolactose (6-O-(α-D-Galactopyranosyl)-D-glucopyranose und/oder 6-O-(β-D-Galactopyranosyl)-D-glucopyranose),
Malzzucker (Maltose, 4-O-(α-D-Glucopyranosyl)-D-glucopyranose und/oder 4-O-(β-D-Glucopyranosyl)-D-glucopyranose),
Trehalose(α-D-Glucopyranosyl-α-D-glucopyranosid),
Cellobiose (4-O-(β-D-Glucopyranosyl)-D-glucopyranose),
Gentiobiose (6-O-(β-D-Glucopyranosyl)-D-glucopyranose) und
Melibiose (6-O-(α-D-Galactopyranosyl)-D-glucopyranose)

sowie die Trisaccharide Raffinose (6-O-(α-D-Galactopyranosyl)-α-D-glucopyranosyl-β-D-fructofuranosid) und Maltotriose (vorzugsweise 4-O-(α-D-Glucopyranosyl)- 4-O-(α-D-glucopyranosyl)-D-glucopyranose und/oder 4-O-(β-D-Glucopyranosyl)-4-O-(β-D-glucopyranosyl)-D-glucopyranose).

Gemäß einer ganz besonders bevorzugten Ausführungsform der vorliegenden Erfindung werden Disaccharide, insbesondere Maltose, Saccharose und/oder Lactose eingesetzt.

Im Rahmen dieser Ausführungsform können auch Mischungen aus mindestens zwei der genannten Komponenten eingesetzt werden.

Das Monosaccharid, das Oligosaccharid bzw. die Mischung enthält vorzugsweise, jeweils bezogen auf sein bzw. ihr Gesamtgewicht, mindestens 20,0 Gew.-%, vorzugsweise mindestens 50,0 Gew.-%, zweckmäßigerweise mindestens 60,0 Gew.-%, bevorzugt mindestens 70,0 Gew.%, besonders bevorzugt mindestens 80,0 Gew.-%, insbesondere mindestens 90,0 Gew.-%, Glucose und/oder Glucoseeinheiten. Die Art der Verknüpfung der Glucoseeinheiten ist in

diesem Zusammenhang prinzipiell unerheblich, sie kann sowohl über die α-Form als auch über die β-Form erfolgen, obwohl sich eine α-glucosidische Verknüpfung erfinderungsgemäß ganz besonders bewährt hat.

Die Mengen an Monosaccharid, und/oder Oligosaccharid können prinzipiell beliebig gewählt werden. Zweckmäßigerweise werden zwischen 0,001 und 300 Gew.-Teile, vorzugsweise zwischen 0,01 und 150 Gew.-Teile, insbesondere zwischen 0,1 und 99 Gew.-Teile, Monosaccharid, Oligosaccharid jeweils bezogen auf 100 Gew.-Teile Polymer (A), eingesetzt.

Die Struktur der Polyvinylacetale gemäß dieser Ausführungsform ist zum derzeitigen Zeitpunkt noch nicht vollständig geklärt. Dennoch deuten die derzeitigen Ergebnisse darauf hin, dass das Monosaccharid, Oligosaccharid und/oder Polysaccharid kovalent an das Polymer gebunden wird, da es sich - anders als bei herkömmlichen Blends - nicht mehr aus dem Polymer, beispielsweise mittels einer Extraktion (z. B. durch Soxhlet-Extraktion), isolieren lässt. Es versteht sich jedoch von selbst, dass die Lehre der vorliegenden Erfindung nicht auf diese Interpretation beschränkt ist.

Gemäß einer weiteren Ausführungsform der vorliegenden Erfindung ist das Polyvinylacetal durch ein Verfahren erhältlich, bei dem man eine Mischung aus

1.) 50,0 bis 99,99 Gewichtsteilen mindestens eines Polymers (A) und
2.) 0,01 bis 50,0 Gewichtsteilen mindestens einer Hydroxyverbindung (C) mit mindestens einer Verbindung (B) der Formel (4) umsetzt. Dabei ergibt die Summe der Gewichtsteile von Polymer (A) und Hydroxyverbindung (C) vorzugsweise 100 Gewichtsteile.

Derartige Polyvinylacetale weisen vergleichbare Eigenschaften wie konventionelle, "weichgemachte" Polyvinylacetale auf, bewahren diese jedoch für einen längeren Zeitraum. Sie eignen sich insbesondere für Anwendungen, bei denen der Weichmacher normalerweise mit der Zeit ausschwitzt, da gemäß dieser Ausführungsform eine Veränderung des Eigenschaftsprofils durch Separation, Aufkonzentrieren, Migration und/oder Ausschwitzen von Komponenten auch nach längerer Zeit, wie beispielsweise einem Jahr, vermieden wird.

Die Hydroxyverbindung (C) genügt der Formel (5)

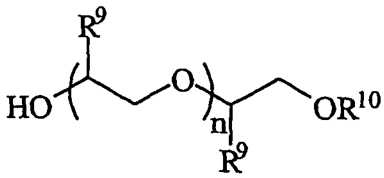

(5)

Der Rest $R^9$ bezeichnet Wasserstoff oder einen Alkylrest mit 1 bis 6 Kohlenstoffatomen, vorzugsweise eine Methyl-, Ethyl-, n-Propyl-, iso-Propyl-, n-Butyl-, sec-Butyl-, tert-Butyl-, n-Pentyl- oder eine n-Hexylgruppe, insbesondere eine Methylgruppe. Gemäß einer ganz besonders bevorzugten Ausführungsform der vorliegenden Erfindung steht der Rest $R^9$ für Wasserstoff.

Dabei können die Reste $R^9$ jeweils unabhängig voneinander gewählt werden, d. h. jede Wiederholungseinheit $-CHR^9-CH_2-O-$ kann einen anderen Rest $R^9$ aufweisen. Folglich umfasst die vorstehende Definition der Hydroxyverbindung (C) sowohl Polyethylenglykol(monoether) und Polypropylenglykol(monoether) als auch Polyethylenglykol-co-propylenglykol(monoether). Letztere können sowohl einen statistischen als auch einen blockartigen Aufbau besitzen.

Der Rest $R^{10}$ kennzeichnet Wasserstoff oder einen Alkylrest mit 1 bis 10 Kohlenstoffatomen, vorzugsweise eine Methyl-, Ethyl-, n-Propyl-, iso-Propyl-, n-Butyl-, sec-Butyl-, tert-Butyl-, n-Pentyl-, n-Hexyl-, n-Heptyl-, n-Octyl-, n-Nonyl- oder eine n-Decylgruppe, insbesondere eine Methylgruppe. Gemäß einer ganz besonders bevorzugten Ausführungsform der vorliegenden Erfindung stellt der Rest $R^{10}$ Wasserstoff dar.

n ist eine Zahl größer gleich 2, vorzugsweise eine Zahl im Bereich von 2 bis 1000, zweckmäßigerweise im Bereich von 3 bis 300 vorteilhafterweise im Bereich von 3 und 25, besonders bevorzugt im Bereich von 3 bis 10, insbesondere im Bereich von 4 bis 6. Weiterhin können besonders günstige Ergebnisse erzielt werden, wenn n eine Zahl im Bereich von 10 bis 20, insbesondere im Bereich von 12 bis 15 ist.

Die Anteile der Ausgangsverbindungen (A), (B) und (C) werden erfindungsgemäß derart gewählt, dass man pro mol Hydroxylgruppen, die das Polymer (A) und die Hydroxyverbindung (C) in Summe enthalten, 0,0005 bis 0,5 mol der Verbindung (B) einsetzt.

Darüber hinaus werden die Verbindungen (B) und (C) vorzugsweise in einem Verhältnis Verbindung (B)/Verbindung (C) von größer gleich eins eingesetzt.

Auch die Struktur dieser Polyvinylacetale ist zum derzeitigen Zeitpunkt noch nicht vollständig geklärt. Dennoch deuten die derzeitigen Ergebnisse darauf hin, dass die Hydroxyverbindung (C) kovalent an das Polymer gebunden ist,

da sie sich - im Gegensatz zu herkömmlichen Weichmachern - nicht mehr aus dem Polymer, beispielsweise mittels einer Extraktion (z. B. durch Soxhlet-Extraktion), isolieren lässt. Es versteht sich jedoch von selbst, dass die Lehre der vorliegenden Erfindung nicht auf diese Interpretation beschränkt ist.

Das Eigenschaftsprofil der Polyvinylacetale gemäß dieser Ausführungsform unterscheidet sich deutlich sowohl von herkömmlichen Polyvinylacetalen, die keinen Weichmacher enthalten, als auch von solchen Polyvinylacetalen, die bei gleichem Umsetzungsgrad (Acetalisierungsgrad) durch Zugabe von Weichmacher plastifiziert wurden. Verglichen mit herkömmlichen Polyvinylacetalen, die keinen Weichmacher enthalten, weisen die Polyvinylacetale gemäß dieser Ausführungsform bei gleichem Acetalisierungsgrad beispielsweise eine niedrigere Glasübergangstemperatur, ein erhöhtes Formveränderungsvermögen, eine geringere Entropieelastizität, erhöhte elastische Eigenschaften, eine geringere Härte und meist ein gesteigertes Haftvermögen auf.

Gegenüber den Polyvinylacetalen, die bei gleichem Umsetzungsgrad (Acetalisierungsgrad) durch Zugabe von Weichmacher plastifiziert wurden, zeichnen sie sich insbesondere durch eine verbesserte Langzeitbeständigkeit ihrer Eigenschaften aus, vor allem ist bei den vorliegenden Polyvinylacetalen eine Veränderung des Eigenschaftsprofils durch Separation, Aufkonzentrieren, Migration und/oder Ausschwitzen von Komponenten durch atmosphärische Einflüsse auch nach längerer Zeit, wie beispielsweise einem Jahr, nicht zu beobachten. Dabei werden in diesem Zusammenhang unter atmosphärischen Einflüssen alle die Faktoren verstanden, die bei der Anwendung von Polyvinylacetalen, insbesondere im Freien, auftreten können, wie beispielsweise Sonneneinstrahlung, Sauerstoff, Ozon, weitere gasförmige Bestandteile der Luft, Temperatur, Luftfeuchtigkeit, Niederschläge, Staubablagerungen usw..

Diese verbesserten Langzeiteigenschaften können insbesondere beim Vergleich der Glasübergangstemperatur (vorzugsweise gemessen mittels DSC, Mettler Toledo Star System, Heizrate 10K/min, 2. Heizen), dem Entiopieelastizitätsmodul (vorzugsweise gemessen gemäß DIN 7724 (Februar 1972)), der Reißfestigkeit (vorzugsweise gemessen gemäß DIN 53455), der Reißdehnung (vorzugsweise gemessen gemäß DIN 53455), der Wasseraufnahme und/oder der Oberflächenspannung der Polyvinylacetale gemäß dieser AusMbnmuform mit herkömmlich extem-plastifizierten Polyvinylacetalen beobachtet werden.

Die Umsetzung der Ausgangsverbindungen (A), (B) sowie gegebenenfalls der Hydroxyverbindung (C) und/oder des Monosaccharids, Oligosaccharids, oder einer Mischung aus mindestens zwei dieser Komponenten erfolgt vorzugsweise in mindestens einem Lösungsmittel. Ein in diesem Zusammenhang besonders zweckmäßiges Lösungsmittel ist Wasser.

Weiterhin fuhrt man die Reaktion günstigerweise in Gegenwart saurer Katalysatoren durch. Geeignete Säuren umfassen sowohl organische Säuren, wie beispielsweise Essigsäure als auch mineralische Säuren, wie Salzsäure, Schwefelsäure und/oder Salpetersäure, wobei sich der Einsatz von Salzsäure, Schwefelsäure und/oder Salpetersäure in der Technik besonders bewährt hat Die Durchführung der Reaktion erfolgt vorzugsweise derart, dass man eine Mischung aus den Komponenten (A) und (B) gegebenenfalls der Hydroxyverbindung (C) und/oder dem Monosaccharid, und/oder Oligosaccharid oder einer Mischung daraus in wässriger Lösung vorlegt und anschließend den sauren Katalysator zutropft. Gemäß einer weiteren bevorzugten Ausführungsform der vorliegenden Erfindung hat es sich auch als günstig erwiesen, eine Mischung aus den Komponenten (A) und (B) in wässriger Lösung vorzulegen, den sauren Katalysator in diese Lösung einzurühren und anschließend das Monosaccharid, Oligosaccharid und/oder Polysaccharid oder einer Mischung daraus zuzugeben. Gemäß einer dritten bevorzugten Ausführungsform der vorliegenden Erfindung hat es sich auch als günstig erwiesen, eine Mischung aus den Komponenten (A) und (B) in wässriger Lösung vorzulegen, den sauren Katalysator in diese Lösung einzurühren und anschließend die Umsetzung durch Zugabe der Verbindung (C) fortzuführen.

Die Reaktionstemperatur kann man über einen weiten Bereich variieren, aber häufig liegt die Temperatur im Bereich von -20,0 °C bis 100,0 °C, vorzugsweise im Bereich von 0,0 °C bis 80,0 °C. Ähnliches gilt für den Druck, bei dem die Umsetzung vollzogen wird. So kann die Reaktion sowohl bei Unterdruck als auch bei Überdruck stattfinden. Vorzugsweise wird sie aber bei Normaldruck durchgeführt.

Alternative Herstellungsweisen der Polymere sind dem Fachmann offensichtlich. So ist es beispielsweise möglich, anstelle der Verbindung (B) Verbindungen einsetzen, die unter den gewählten Reaktionsbedingungen Verbindungen (B) freisetzen. Hierzu gehören u. a. cyclische Trimere von Aldehyden sowie Acetale von Aldehyden oder Ketonen. Weiterhin ist es im Rahmen der ersten bevorzugten Ausführungsform selbstverständlich auch möglich, das Polymer (A) zunächst durch Umsetzung mit einer entsprechenden Menge an Monosaccharid, und/oder Oligosaccharid oder einer Mischung daraus teilweise zu acetalisieren und dann das resultierende Polymer mit Verbindung (B) umzusetzen. Ferner besteht im Rahmen der zweiten bevorzugten Ausführungsform auch die Möglichkeit, das Polymer (A) zunächst durch Umsetzung mit einer entsprechenden Menge an Verbindung (B) teilweise zu acetalisieren, dann die Hydroxyverbindung (C) zuzumischen und die resultierende Mischung mit einer weiteren Menge an Verbindung (B) umzusetzen.

Gemäß einer bevorzugten Ausführungsform der vorliegenden Erfindung ist das Polyvinylacetal vernetzt. Hierbei kann die Vernetzung auf an sich bekannte Weise, beispielsweise durch Umsetzung verbleibender Hydroxylgruppen im Polyvinylacetal mit Di- oder Polyaldehyden erfolgen. Besonders günstig ist es jedoch, das Polyvinylacetal durch Umsetzung und intermolekulare Veresterung verbleibender Hydroxylgruppen im Polymer mit einer anacetalisierten Aldehydcarbonsäure, insbesondere Glyoxylsäure, zu vernetzen.

Im Rahmen einer weiteren bevorzugten Ausführungsform der vorliegenden Erfindung ist das Polyvinylacetal nicht vernetzt und weist dabei vorzugsweise ein Gewichtsmittel des Molekulargewichtes kleiner 1 000 000 g/mol, zweckmäßigerweise kleiner 500 000 g/mol, insbesondere kleiner 200 000 g/mol, auf. Dabei kann das Gewichtsmittel des Molekulargewichtes auf an sich bekannte Weise, beispielsweise mittels statischer Lichtstreuung, bestimmt werden. Für die Zwecke der vorliegenden Erfindung hat sich weiterhin die Gelpermeationschromatographie, günstigerweise unter Verwendung einer Polyvinylacetalkalibrierung, besonders bewährt.

Das Polyvinylacetal kann sowohl in Wasser löslich als auch unlöslich sein. Diese Eigenschaft ist abhängig vom Acetalisierungsgrad des Polyvinylacetals, wobei Polyvinylacetale mit einem geringen Acetalisierungsgrad eher in Wasser löslich sind als Polyvinylacetale mit einem hohen Acetalisierungsgrad.

Die zuvor beschriebenen Polyvinylacetale können einzeln oder als Mischung von zwei oder mehr Polyvinylacetalen eingesetzt werden.

Des weiteren kann die Zusammensetzung weitere Zusatzstoffe enthalten.

Gemäß einem besonderen Aspekt der vorliegenden Erfindung weist das Polyvinylacetal vorzugsweise eine Glasübergangstemperatur größer oder gleich 0°C, insbesondere größer oder gleich 60°C auf. Bevorzugt liegt die Glasübergangstemperatur des Polyvinylacetals im Bereich von 5°C bis 120°C, insbesondere 30 bis 110°C und besonders bevorzugt 50 bis 100°C. Hierbei kann die Glasübergangstemperatur des Polyvinylacetals gemäß weiteren bevorzugten bevorzugten Aspekten im Bereich von 50 bis kleiner 65°C, 65 bis 85°C oder größer 85°C bis 100°C liegen.

Die Zusammensetzung zur Herstellung des Granulats, die das Polyvinylacetal enthält, weist vorzugsweise eine Glasübergangstemperatur größer oder gleich 0°C, insbesondere größer oder gleich 60°C auf. Bevorzugt liegt die Glasübergangstemperatur der Zusammensetzung im Bereich von 5°C bis 120°C, insbesondere 30 bis 110°C und besonders bevorzugt 50 bis 100°C. Hierbei kann die Glasübergangstemperatur der Zusammensetzung gemäß weiteren bevorzugten bevorzugten Aspekten im Bereich von 50 bis kleiner 65°C, 65 bis 85°C oder größer 85°C bis 100°C liegen.

Falls die Zusammensetzung mehr als einen Glasübergang aufweist, beziehen sich diese Angaben auf den ersten Übergang, der die geringste Temperatur aufweist.

Die Messung der Glasübergangstemperatur kann unter anderem mittels DSC (Mettler Toledo Star System, Heizrate 10K/min, 2. Heizen) gemessen werden.

Gemäß einem besonderen Aspekt der vorliegenden Erfindung umfasst die Zusammensetzung zur Herstellung des Granulats, die das das Polyvinylacetal enthält, vorzugsweise mindestens 50 Gew.-%, insbesondere mindestens 70 Gew.%, bevorzugt mindestens 90 Gew.-%, besonders bevorzugt mindestens 95 Gew.% und ganz besonders bevorzugt mindestens 98 Gew.-% Polyvinylacetal.

Im Rahmen der vorliegenden Erfindung kann es zweckmäßig sein, dass das Granulat - je nach Anwendung - weitere Zusatzstoffe enthält. In diesem Zusammenhang besonders zweckmäßige Zusatzstoffe umfassen weitere Polymerharze, Weichmacher, Pigmente, Füllstoffe, Stabilisatoren, Haftungsverbesserer, Antihaftmittel, rheologische Hilfsmittel, den pH-Wert beeinflussende Additive und Substanzen, die chemische Reaktionen sowohl zwischen dem Polyvinylacetal mit sich selbst oder mit den gegebenenfalls vorhandenen weiteren Polymerharzen als auch zwischen den gegebenenfalls vorhandenen Polymerharzen untereinander katalysieren oder selbst verursachen. Erfindungsgemäß ganz besonders vorteilhafte Zusatzstoffe sind faserverstärkende Materialien, insbesondere Kurzglasfasern, Langglasfasern, Aramidfasern und/oder Carbonfasern. Im Rahmen einer ganz besonders bevorzugten Ausführungsform enthält das Granulat mindestens ein Antioxidanz.

Antioxidantien, gelegentlich auch Oxidationsinhibitoren genannte Substanzen, bezeichnen im Rahmen der vorliegenden Erfindung, vorzugsweise organische, Verbindungen, welche unerwünschte, durch Sauerstoff-Einwirkung u. a. oxidative Prozesse bedingte Veränderungen in dem Polyvinylacetal hemmen und/oder verhindern. Derartige Verbindungen sind aus dem Stand der Technik hinlänglich bekannt und werden z. B. in Kunststoffen und Kautschuken (insbesondere zum Schutz gegen Alterung), Fetten (insbesondere zum Schutz vor Ranzigkeit), Ölen, Viehfutter, Autobenzin und Düsentreibstoffen (insbesondere zum Schutz vor Verharzung), Transformatoren- und Turbinenöl (insbesondere zum Schutz vor Schlammbildung), Aromastoffen (insbesondere zum Schutz vor der Bildung unerwünschter Aromakomponenten) und Anstrichstoffen (insbesondere zum Schutz vor Hautbildungen) eingesetzt.

Die Wirkung der Antioxidantien besteht meist darin, dass sie als Radikalfänger für die bei der Autooxidation auftretenden freien Radikale wirken. Für weitere Details wird auf die gängige Fachliteratur, insbesondere auf das Römpp-Lexikon Chemie; Herausgeber: J. Falbe, M. Regitz; Stuttgart, New York; 10. Auflage (1996); Stichwort "Antioxioxidantien" und die an dieser Stelle zitierten Literaturstellen verwiesen.

Für die Zwecke der vorliegenden Erfindung besonders geeignete Antioxidantien umfassen u. a. Tocopherol, tert.-Butylmetoxyphenol (BHA), Butylhydroxytoluol (BHT), Octylgallat, Dodecylgallat, Ascorbinsäure, Milchsäure, Citronensäure, Weinsäure, ggf. substituierte Phenole, ggf. substituierte Hydrochinone, ggf. substituierte Chinone, ggf. substituierte Brenzcatechine, ggf. substituierte aromatische Amine, ggf. substituierte Metallkomplexe eines aromatischen Amins, ggf. substituierte Triazine, organische Sulfide, organische Polysulfide, organische Dithiocarbamate, organische Phosphite und organische Phosphonate.

Erfindungsgemäß ganz besonders bevorzugte Granulate weisen ggf. substituierte Phenole als Antioxidantien auf. Diese genügen vorzugsweise der Formel (6)

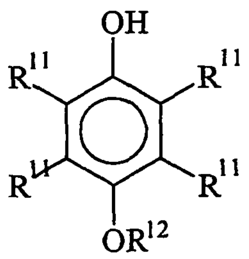

(6)

wobei die Reste $R^{11}$, jeweils unabhängig voneinander, Wasserstoff, ein linearer oder verzweigter Alkylrest, vorzugsweise mit 1 bis 8 Kohlenstoffatomen, insbesondere ein Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylrest, welcher günstigerweise 1 bis 4 Kohlenstoffatome aufweist,
ein ggf. substituierter Cycloalkylrest, vorzugsweise mit 4 bis 8 Kohlenstoffatomen, insbesondere ein Cyclohexylrest,
ein ggf. substituierter Arylrest, vorzugsweise mit 6 bis 18 Kohlenstoffatomen, oder
ein Halogen, vorzugsweise Fluor, Chlor oder Brom sind, und
wobei $R^{12}$ für einen linearen oder verzweigten Alkylrest, vorzugsweise mit 1 bis 8 Kohlenstoffatomen, insbesondere für einen Methyl-, Ethyl-, n-Propyl-, iso-Propyl-, n-Butyl-, iso-Butyl-, tert.-Butyl-, n-Pentyl-, n-Hexyl-, n-Heptyl- oder für einen n-Oktylrest, welcher besonders bevorzugt 1 bis 4 Kohlenstoffatome aufweist,
für einen ggf. substituierten Cycloalkylrest, vorzugsweise mit 4 bis 8 Kohlenstoffatomen, insbesondere für einen Cyclohexylrest, oder
für einen ggf. substituierten Arylrest, vorzugsweise mit 6 bis 18 Kohlenstoffatomen, steht.

Weiterhin haben sich auch Verbindungen der Formel (7) für die Zwecke der vorliegenden Erfindung besonders bewährt

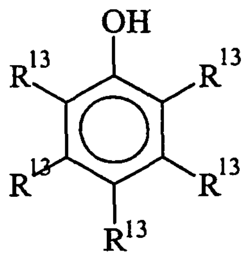

(7)

wobei die Reste $R^{13}$, jeweils unabhängig voneinander, Wasserstoff,
ein linearer oder verzweigter Alkylrest, vorzugsweise mit 1 bis 8 Kohlenstoffatomen, insbesondere ein Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylrest, welcher besonders bevorzugt 1 bis 4 Kohlenstoffatome aufweist,
ein ggf. substituierter Cycloalkylrest, vorzugsweise mit 4 bis 8 Kohlenstoffatomen, insbesondere ein Cyclohexylrest,
ein ggf. substituierter Arylrest, vorzugsweise mit 6 bis 18 Kohlenstoffatomen,
ein Halogen, vorzugsweise Fluor, Chlor oder Brom oder
ein Rest der Formel (8) sind,

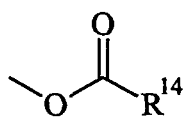

(8)

in welcher $R^{14}$ für einen linearen oder verzweigten Alkylrest mit 1 bis 6 Kohlenstoffatomen, vorzugsweise für einen

Methyl-, Ethyl-, n-Propyl-, iso-Propyl-, n-Butyl-, iso-Butyl-, tert.-Butyl-, n-Pentyl- oder n-Hexylrest, insbesondere für einen Ethylrest, steht.

In diesem Zusammenhang ganz besonders günstige Verbindungen genügen der Formel (9)

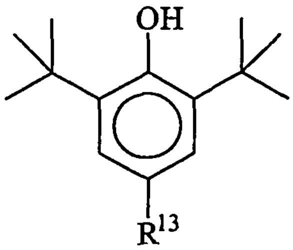

(9)

Darüber hinaus können auch unter Verwendung von Verbindungen der Formel (10) besonders günstige Ergebnisse erzielt werden

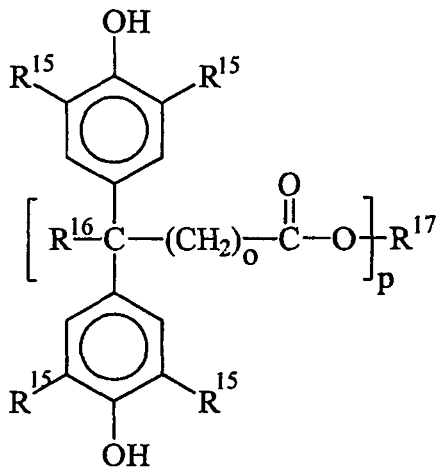

(10)

wobei o eine ganze Zahl im Bereich von 1 bis 4 und p gleich 1 oder 2, vorzugsweise 2, ist,
wobei die Reste $R^{15}$, jeweils unabhängig voneinander, Wasserstoff,
ein linearer oder verzweigter Alkylrest, vorzugsweise mit 1 bis 8 Kohlenstoffatomen, insbesondere ein Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylrest, welcher besonders bevorzugt 1 bis 4 Kohlenstoffatome aufweist oder
ein ggf. substituierter Cycloalkylrest, vorzugsweise mit 4 bis 8 Kohlenstoffatomen, insbesondere ein Cyclohexylrest, sind,
wobei $R^{16}$ Wasserstoff oder
einen linearen oder verzweigten Alkylrest, vorzugsweise mit 1 bis 8 Kohlenstoffatomen, insbesondere einen Methyl-, Ethyl-, n-Propyl-, iso-Propyl-, n-Butyl-, iso-Butyl-, tert.-Butyl-, n-Pentyl-, n-Hexyl-, n-Heptyl- oder einen n-Oktylrest, insbesondere einen Methylrest, bezeichnet, und
wobei $R^{17}$ für eine einbindige Alkylgruppe oder zweibindige Alkylengruppe, vorzugsweise eine lineare, $\alpha$, $\omega$-zweibindige Alkylengruppe, bevorzugt mit 1 bis 8 Kohlenstoffatomen, insbesondere für eine Methyl-, Methylen-, Ethyl-, 1,2-Ethylen-, n-Propyl-, 1,3-n-Propylen-, iso-Propyl-, n-Butyl-, iso-Butyl-, tert.-Butyl-, 1,4- Butylen-, n-Pentyl-, 1,5- Pentylen-, n-Hexyl-, 1,6- Hexylen-, n-Heptyl-, 1,7-Heptylen-, n-Oktyl- oder eine 1,8- Oktylengruppe, welche besonders bevorzugt 1 bis 4, ganz besonders bevorzugt 2, Kohlenstoffatome aufweist, steht.

Eine besonders bevorzugte Verbindung der Formel (10) ist Bis-[3,3-bis-(4'-hydroxy-3'-tert.-butylphenyl)-butansäure]-glykolester.

Im Rahmen einer besonders bevorzugten Ausführungsform der vorliegenden Erfindung ist das Antioxidans ein ggf. substituiertes Chinon, welches günstigerweise die Formel (11) aufweist

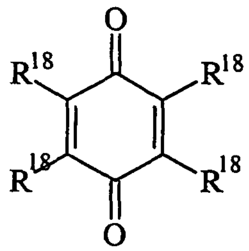

(11)

wobei die Reste $R^{18}$, jeweils unabhängig voneinander, Wasserstoff,
ein linearer oder verzweigter Alkylrest, vorzugsweise mit 1 bis 8 Kohlenstoffatomen, insbesondere ein Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylrest, welcher besonders bevorzugt 1 bis 4 Kohlenstoffatome umfasst,
ein ggf. substituierter Cycloalkylrest, vorzugsweise mit 4 bis 8 Kohlenstoffatomen, insbesondere ein Cyclohexylrest,
ein ggf. substituierter Arylrest, vorzugsweise mit 6 bis 18 Kohlenstoffatomen, oder
ein Halogen, vorzugsweise Fluor, Chlor oder Brom sind.

Weiterhin haben sich auch ggf. substituierte Triazine, insbesondere solche der Formel (12) für die Zwecke der vorliegenden Erfindung ganz besonders bewährt.

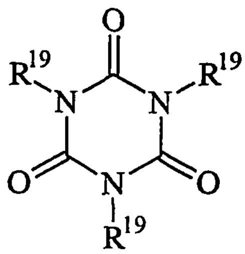

(12)

wobei die Reste $R^{19}$ ein ggf. substituierter Hydroxyphenylrest, vorzugsweise ein Rest der Formel (12a), (12b) oder (12c), sind

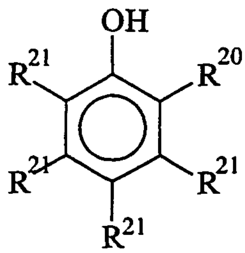

(12a)

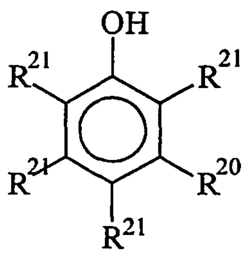

(12b)

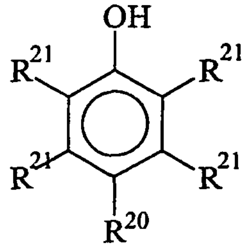

(12c)

In diesem Zusammenhang steht $R^{20}$ für eine Bindung oder für eine, vorzugsweise lineare, $\alpha$, $\omega$-zweibindige Alkylengruppe, vorzugsweise mit 1 bis 8 Kohlenstoffatomen, insbesondere für eine Methylen-, 1,2-Ethylen-, 1,3- Propylen-, 1,4- Butylen-, 1,5- Pentylen-, 1,6- Hexylen-, 1,7- Heptylen- oder eine 1,8-Oktylengruppe, welche besonders bevorzugt 1 bis 4, ganz besonders bevorzugt 2, Kohlenstoffatome aufweist, und
die Reste $R^{21}$ kennzeichnen, jeweils unabhängig voneinander, Wasserstoff, oder einen linearen oder verzweigten Alkylrest, vorzugsweise mit 1 bis 8 Kohlenstoffatomen, insbesondere einen Methyl-, Ethyl-, n-Propyl-, iso-Propyl-, n-Butyl-, iso-Butyl-, tert.-Butyl-, n-Pentyl-, n-Hexyl-, n-Heptyl- oder einen n-Oktylrest, welcher besonders bevorzugt 1 bis 4, ganz besonders 1 oder 2, Kohlenstoffatome aufweist.

Ferner haben sich erfindungsgemäß auch Benzofuranone als Antioxidans als ganz besonders günstig erwiesen. Diese genügen vorzugsweise der Formel (13)

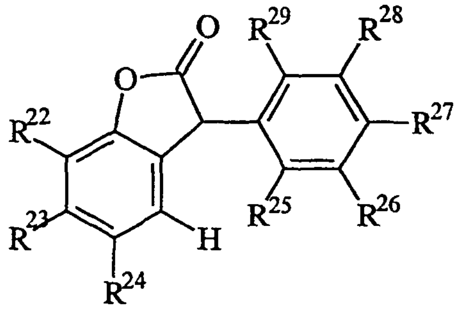

(13)

Dabei bezeichnen die Reste $R^{22}$, $R^{23}$, $R^{25}$, $R^{26}$, $R^{27}$, $R^{28}$, $R^{29}$, jeweils unabhängig voneinander, Wasserstoff, eine Hydroxygruppe,
eine lineare oder verzweigte Alkylgruppe, vorzugsweise mit 1 bis 18 Kohlenstoffatomen, insbesondere eine Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylgruppe, welche besonders bevorzugt 1 bis 4 Kohlenstoffatome umfasst,
eine unsubstituierte oder eine mono-, di-, oder tri-alkylsubstituierte Phenylgruppe, wobei die Alkylgruppe vorzugsweise 1 bis 4 Kohlenstoffatome enthält,
eine Phenylalkylgruppe, welche vorzugsweise 7 bis 9 Kohlenstoffatome umfasst,
eine Cycloalkylgruppe mit vorzugsweise 5 bis 12 Kohlenstoffatomen, insbesondere eine Cyclohexylgruppe, welche unsubstituiert oder mono-, di- oder tri-alkylsubstituiert sein kann, wobei der/die Alkylreste vorzugsweise 1 bis 4 Kohlenstoffatome enthält, oder
eine Alkoxygruppe mit vorzugsweise 1 bis 18 Kohlenstoffatomen, insbesondere eine Methoxy-, Ethoxy-, n-Propoxy-, iso-Propoxy-, n-Butoxy-, iso-Butoxy-, tert.-Butoxy-, n-Pentoxy-, n-Hexoxy-, n-Heptoxy- oder eine n-Oktoxygruppe.

Der Rest $R^{24}$ ist Wasserstoff,
eine Hydroxygruppe,
eine lineare oder verzweigte Alkylgruppe, vorzugsweise mit 1 bis 18 Kohlenstoffatomen, insbesondere eine Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylgruppe, welche besonders bevorzugt 1 bis 4 Kohlenstoffatome umfasst,
eine unsubstituierte oder eine mono-, di-, oder tri-alkylsubstituierte Phenylgruppe, wobei die Alkylgruppe vorzugsweise 1 bis 4 Kohlenstoffatome enthält,
eine Phenylalkylgruppe, welche vorzugsweise 7 bis 9 Kohlenstoffatome umfasst,
eine Cycloalkylgruppe mit vorzugsweise 5 bis 12 Kohlenstoffatomen, insbesondere eine Cyclohexylgruppe, welche unsubstituiert oder mono-, di- oder tri-alkylsubstiuiert sein kann, wobei der/die Alkylreste vorzugsweise 1 bis 4 Kohlenstoffatome enthält,
eine Alkoxygruppe mit vorzugsweise 1 bis 18 Kohlenstoffatomen, insbesondere eine Methoxy-, Ethoxy-, n-Propoxy-, iso-Propoxy-, n-Butoxy-, iso-Butoxy-, tert.-Butoxy-, n-Pentoxy-, n-Hexoxy-, n-Heptoxy- oder eine n-Oktoxygruppe, oder ein Rest der Formel (14)

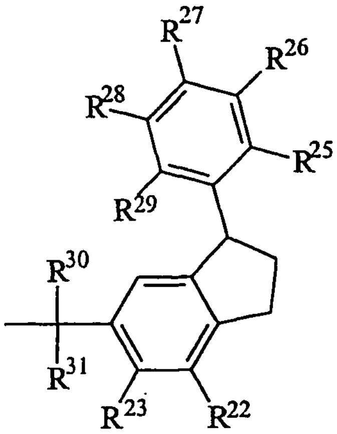

(14)

Die Reste $R^{22}$, $R^{23}$, $R^{25}$, $R^{26}$, $R^{27}$, $R^{28}$ und $R^{29}$ besitzen dabei die vorgenannte Bedeutung, wobei vorzugsweise mindestens zwei der Reste $R^{25}$, $R^{26}$, $R^{27}$, $R^{28}$ und $R^{29}$ Wasserstoff sind.

Die Reste $R^{30}$ und $R^{31}$ stehen, jeweils unabhängig voneinander, für Wasserstoff oder
eine lineare oder verzweigte Alkylgruppe, vorzugsweise mit 1 bis 18 Kohlenstoffatomen, insbesondere eine Methyl-, Ethyl-, n-Propyl-, iso-Propyl-, n-Butyl-, iso-Butyl-, tert.-Butyl-, n-Pentyl-, n-Hexyl-, n-Heptyl- oder ein n-Oktylgruppe, welche besonders bevorzugt 1 bis 4 Kohlenstoffatome umfasst. Zweckmäßigerweise kennzeichnen beide Reste $R^{30}$ und $R^{31}$ eine Methylgruppe.

Erfindungsgemäß ganz besonders geeignete Verbindungen der Formel (13) weisen als Rest $R^{23}$ Wasserstoff oder
als Rest $R^{25}$, $R^{26}$, $R^{27}$, $R^{28}$ und $R^{29}$ Wasserstoff oder
als Rest $R^{22}$, $R^{23}$ und $R^{24}$ eine Alkylgruppe mit vorzugsweise 1 bis 18 Kohlenstoffatomen, insbesondere eine tert.-Butylgruppe, oder eine unsubstituierte oder mono-, di- oder trisubstituierte Phenylgruppe auf, wobei im letzten Fall die Alkylgruppe vorzugsweise 1 bis 4 Kohlenstoffatome enthält.

Im Rahmen einer ganz besonders bevorzugten Ausführungsform der vorliegenden Erfindung werden 1,4-Dihydroxybenzol, 4-Methoxyphenol, 2,5-Dichloro-3,6-dihydroxy-1,4-benzochinon, 1,3,5-Trimethyl-2,4,6-tris-(3,5-di-tert.butyl-4-hydroxybenzyl)benzol, 2,6-Di-tert. butyl-4-methylphenol, 2,4-Dimethyl-6-tert. butylphenol, 2,2-Bis [3,5-Bis (1,1-dimethylethyl)-4-hydroxyphenyl-1-oxopropoxymethyl)]1,3-propandiylester, 2,2'-Thiodiethylbis-[3-(3,5-di-tert.butyl-4-hydroxyphenyl)]propionat, Octadecyl-3-(3,5-di-tert.butyl-4-hydroxyphenyl)propionat, 3,5-Bis(1,1-dimethylethyl-2,2-Methylenbis-(4-methyl-6-tert.butyl)phenol, Tris-(4-tert.butyl-3-hydroxy-2,6-dimethylbenzyl)-s-triazin-2,4,6-(1H,3H,5H) trion, Tris (3,5-ditert.butyl-4-hydroxy)-s-triazin-2,4,6-(1H, 3H,5H) trion und/oder tert Butyl-3,5-dihydroxybenzol als Antioxidans eingesetzt.

Bezogen auf das Gesamtgewicht des erfindungsgemäßen Granulats beträgt der Anteil der Antioxidantien einzeln oder als Mischung vorzugsweise 0,001 bis 2,0 Gew.-%, wobei man die Konzentration der Inhibitoren vorzugsweise so auswählt, dass die Farbzahl gemäß DIN 55945 nicht beeinträchtigt wird.

Gemäß einer besonders bevorzugten Ausführungsform der vorliegenden Erfindung wird das Antioxidans in Kombination mit synergistisch wirkenden stickstoffhaltigen, schwefelhaltigen oder phosphorhaltigen Costabilisatoren, vorzugsweise des Typs a) bis d) oder in Kombination mit Mischungen von Costabilisatoren der Typen a) bis d), verwendet.

a) stickstoffhaltige Verbindungen der Formel (15)

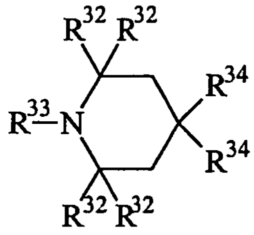

(15)

wobei die Reste $R^{32}$, jeweils unabhängig voneinander, ein linearer oder verzweigter Alkylrest, vorzugsweise mit 1 bis 4 Kohlenstoffatomen, wie ein Methyl-, Ethyl-, n-Propyl-, iso-Propyl-, n-Butyl-, iso-Butyl- oder ein tert.-Butylrest, insbesondere ein Methylrest, oder
ein ggf. substituierter Cycloalkylrest, vorzugsweise mit 4 bis 8 Kohlenstoffatomen, insbesondere ein Cyclohexylrest, sind,
wobei $R^{33}$ für Wasserstoff,
einen linearen oder verzweigten Alkylrest, vorzugsweise mit 1 bis 18 Kohlenstoffatomen, insbesondere für einen Methyl-, Ethyl-, n-Propyl-, iso-Propyl-, n-Butyl-, iso-Butyl-, tert.-Butyl-, n-Pentyl-, n-Hexyl-, n-Heptyl- oder einen n-Oktylrest, welcher besonders bevorzugt 1 bis 8, ganz besonders bevorzugt 1 bis 4, Kohlenstoffatome aufweist,
einen ggf. substituierten Cycloalkylrest, vorzugsweise mit 4 bis 8 Kohlenstoffatomen, insbesondere für einen Cyclohexylrest,
einen linearen oder verzweigten Hydroxylalkylrest, vorzugsweise mit 1 bis 18, bevorzugt 1 bis 8, insbesondere 1 bis 4, Kohlenstoffatomen, oder
einen linearen oder verzweigten Alkoxyrest, vorzugsweise mit 1 bis 18, bevorzugt 1 bis 8, insbesondere 1 bis 4, Kohlenstoffatomen,
besonders bevorzugt für Wasserstoff, steht und
wobei die Reste $R^{34}$, jeweils unabhängig voneinander, einen linearen oder verzweigten Alkylrest kennzeichnen, welcher ein oder mehrere, ggf. verschiedene Heteroatome, vorzugsweise Stickstoff und/oder Sauerstoff, die gleich oder verschiedenen sein können sowie Epoxidgruppen enthalten kann, oder
wobei die Reste $R^{34}$ gemeinsam mit dem C-Atom des Piperidinrings einen monocyclischen oder mehrfachcyclischen Rest mit bis zu 60 Kohlenstoffatomen bilden, der verzweigt sein kann und ein oder mehrere, ggf. verschiedene Heteroatome, vorzugsweise Stickstoff und/oder Sauerstoff, sowie Epoxidgruppen enthalten kann,
ferner ist auch der Einsatz polymerer oder copolymerer Formen von Verbindungen der Formel (15) für Zwecke der vorliegenden Erfindung besonders günstig;

b) stickstoffhaltige Verbindungen aus der Gruppe der aliphatischen Carbonsäurehydrazide oder Dicarbonsäuredihydrazide, vorzugsweise mit 2 bis 12 Kohlenstoffatomen, insbesondere Adipinsäuredihydrazid, besonders bevorzugt Essigsäurehydrazid;

c) schwefelhaltige Verbindungen aus der Gruppe der Dialkylsulfide und -disulfide, wobei die Alkylreste vorzugsweise 4 bis 18, insbesondere 8 bis 12 Kohlenstoffatome aufweisen,
Thiozinnverbindungen der Formel $R_xSn(\text{-S-CH}_2\text{-COOR})_y$, wobei x + y = 4, x, y = 1 bis 3, vorzugsweise x, y = 2, bedeutet und R für einen linearen oder verzweigten Alkylrest, vorzugsweise mit 1 bis 18 Kohlenstoffatomen, zweckmäßigerweise 8 bis 12 Kohlenstoffatomen, insbesondere für einen Oktylrest, steht,
Dialkylthiodipropionate, wobei die Alkylreste vorzugsweise 1 bis 18, günstigerweise 8 bis 14 Kohlenstoffatome aufweisen, besonders bevorzugt Dilaurylthiodipropionat;

d) Phosphorhaltige Verbindungen aus der Gruppe der hydrolysebeständigen Phosphite, vorzugsweise Alkylarylphosphite, insbesondere Tris-(2,4-ditert.-butylphenyl)-phosphit.

Die vorstehend als Costabilisatortypen a) bis d) genannten Verbindungen zeigen im Rahmen der vorliegenden Erfindung überraschenderweise eine synergistische antioxidative und thermostabilisierende Wirksamkeit, indem sie eine weitere Verringerung der oxidativ und thermisch bedingten Folienverfärbungen bewirken können, während bei ihrer Einzelanwendung eine solche Wirksamkeit nicht beobachtet werden kann. Die lichtstabilisierende Wirkung der Costabilisatoren der Formel (15) bleibt bei ihrer synergistischen Kombination mit den Antioxidantien in Polyvinylacetalen, insbesondere in Polyvinylbutyral-Folien, offensichtlich erhalten und kann zusätzlich zur Lichtstabilisierung des Polyvinylacetals beitragen. Besonders gute synergistische Wirksamkeiten können durch die Kombination mehrerer verschiedener, vorzugsweise bis zu 4, Costabilisatoren der Typen a) bis d) erzielt werden.

Unter den stickstoffhaltigen Costabilisatoren des Typs a) der vorstehend spezifizierten Formel (15), welche strukturgemäß Piperidinderivate darstellen, werden vorzugsweise die bekannten Lichtstabilisatoren vom "HALS"-Typ (= hindered amine light stabilization) verwendet. Es wurde hierbei überraschenderweise gefunden, dass deren synergistische costabilisierende und vergilbungshemmende Wirksamkeit mit steigendem Molekulargewicht der HALS-Komponente zunimmt, wodurch Polyvinylacetale, , vorzugsweise Formkörper, insbesondere plastifizierte PVB-Flachfolien, mit noch stärker abnehmender Vergilbungsneigung erhalten werden können, so dass die höhermolekularen HALS-Verbindungen des Typs a) besonders bevorzugte Costabilisatoren sind. Besonders bevorzugt sind ferner polymere und copolymere Formen von Verbindungen der Formel (15), da diese u.a. ebenfalls nicht aus dem PVB migrieren können. Besonders bevorzugt sind die aus epoxidgruppenhaltigen Verbindungen der Formel (15) hergestellten polymeren und copolymeren Formen. Als Costabilisatoren der Formel (15) werden folgende Verbindungen besonders bevorzugt verwendet:

Bis-(2,2,6,6-tetramethylpiperidyl)-sebacat, -glutarat und -succinat,
Bis-(1,2,2,6,6-pentamethylpiperidyl)-sebacat, -glutarat und -succinat,
4-Stearyloxy- und 4-Stearoyloxy-2,2,6,6-tetramethyl-piperidin,
4-Stearyloxy- und 4-Stearoyloxy-1,2,2,6,6-pentamethyl-piperidin,
2,2,6,6-Tetramethylpiperidylbehenat,
1,2,2,6,6-Pentamethylpiperidylbehenat,
2,2,4,4-Tetramethyl-7-oxa-3,20-diaza-dispiro-[5.1.11.2]-heneicosan-21-on,
2,2,3,4,4-Penta-methyl-7-oxa-3,20-diaza-dispiro-[5.1.11.2]-heneicosan-21-on,
2,2,4,4-Tetramethyl-3-acetyl-7-oxa-3,20-diaza-dispiro-[5.1.11.2]-heneicosan-21-on,
2,2,4,4-Tetramethyl-7-oxa-3,20-diaza-20-(β-lauryloxycarbonylethyl)-21-oxo-dispiro-[5.1.11.2]-heneicosan,
2,2,3,4,4-Pentamethyl-7-oxa-3,20-diaza-20-(β-lauryloxycarbonylethyl)-21-oxo-dispiro-[5.1.11.2]-heneicosan,
2,2,4,4-Tetramethyl-3-acetyl-7-oxa-3,20-diaza-20-(β-lauryloxycarbonylethyl)-21-oxo-dispiro-[5.1.11.2]-heneicosan,
1,1’,3,3’,5,5’-Hexahydro-2,2’,4,4’,6,6’,-hexaaza-2,2’,6,6’-bismethano-7,8-dioxo-4,4’-bis-(1,2,2,6,6-pentamethyl-4-piperidyl)-biphenyl,
N,N’,N",N"’-Tetrakis- {2,4-bis-[N-(2,2,6,6-tetramethyl-4-piperidyl)-butylamino]-1,3,5-triazin-6-yl}-4,7diazadecan-1,10-diamin,
N,N’,N",N"’-Tetrakis-{2,4-bis-[N-(1,2,2,6,6-pentamethyl-4-piperidyl)-butylamino]-1,3,5-triazin-6-yl}-4,7-diazadecan-1,10-diamin,
N,N’,N",N"’-Tetrakis-{2,4-bis-[N-(2,2,6,6-tetramethyl-4-piperidyl)-methoxypropylamino]-1,3,5-triazin-6-yl}-4,7-diazadecan-1,10-diamin,
N,N’,N",N’’’-Tetrakis-{2,4-bis-[N-(1,2,2,6,6-pentamethyl-4-piperidyl)-methoxypropylamino]-1,3-5-triazin-6-yl}-4,7-diazadecan-1,10-diamin,
Bis-(1,2,2,6,6-pentamethyl-piperidyl)-n-butyl-3,5-di-tert.-butyl-4-hydroxybenzylmalonat,
Tris-(2,2,6,6-tetramethyl-4-piperidyl)-nitrilotriacetat,
Tetrakis-(2,2,6,6-tetramethyl-4-piperidyl)-1,2,3,4-butantetracarbonsäure,
1, 1’-(1,2-Ethandiyl)-bis-(3,3,5,5-tetramethyl-piperazinon);

ferner Poly-N,N’-bis-(2,2,6,6-tetramethyl-4-piperidyl)-1,8-diazadecylen, Kondensationsprodukte aus 1-(2-Hydroxyethyl)-2,2,6,6-tetramethyl-4-hydroxypiperidin und Bernsteinsäure,

Kondensationsprodukte aus N,N-Bis-(2,2,6,6-tetramethyl-4-piperidyl)-hexamethylendiamin und 4-tert.-Oktylamino-2,6-dichlor-1,3,5-s-triazin, Kondensationsprodukte aus N,N-Bis-(2,2,6,6-tetramethyl-4-piperidyl)-hexamethylendiamin und 4-Morpholino-2,6-dichlor-1,3,5-triazin, sowie polymerisiertes 2,2,4,4-Tetramethyl-7-oxa-3,20-diaza-(2,3-epoxi-propyl)-dispiro[5.1.11.2.]-heneicosan-21-on, erhalten aus der monomeren Verbindung der Formel

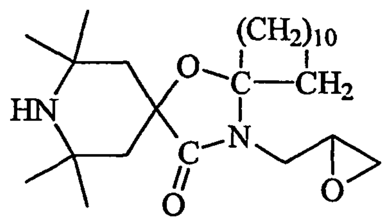

wobei die Polymerisation über die Epoxipropylgruppe erfolgt. Dieses polymere Produkt ist ein besonders bevorzugter Costabilisator auf der Basis einer Formel (15)-Verbindung des Typs a). Dabei ist das Molekulargewicht des Polymerisats

nicht kritisch und kann in einem breiten Bereich variieren mit der Prämisse, dass das Produkt in dem Polyvinylacetal stets vollständig und klar löslich sein muss.

Bei Mitverwendung erfindungsgemäßer Costabilisatoren der Typen a) bis d) beträgt die Einsatzmenge des Antioxidans vorzugsweise 0,05 bis 0,6 Gew.-%, insbesondere 0,07 bis 0,4 Gew.-%, besonders bevorzugt 0,1 bis 0,3 Gew.-%, und die Einsatzmenge des Costabilisators bzw. des Costabilisatorengemisches vorzugsweise 0,01 bis 0,5 Gew.-%, insbesondere 0,1 bis 0,4 Gew.-%, wobei die Gesamtmenge aus Antioxidans und Costabilisator(en) vorzugsweise $\leq$ 0,8 Gew.%, insbesondere 0,2 bis 0,4 Gew.-%, beträgt, jeweils bezogen auf das Gesamtgewicht der Mischung. Das Gewichtsverhältnis von Antioxidans zu dem Costabilisator bzw. Costabilisatorengemisch beträgt vorzugsweise 90: 10 bis 20:80.

Der Anteil der Zusatzstoffe richtet sich in erster Linie nach der beabsichtigten Anwendung und somit dem benötigten Eigenschaftsprofil. Es können sowohl sehr geringe Mengen, wie beispielsweise nur 0,1 Gew.-%, bezogen auf das Gesamtgewicht des Granulats, als auch sehr große Mengen erforderlich sein. Es hat sich jedoch als besonders günstig erwiesen, dass der Gesamtanteil an Zusatzstoffen, jeweils bezogen auf das Gesamtgewicht des Granulats, höchstens 50,0 Gew.-%, vorzugsweise höchstens 40,0, zweckmäßigerweise höchstens 35,0 Gew.-%, bevorzugt höchstens 30,0 Gew.-%, insbesondere geringer als 25,0 Gew.%, ist.

Im Rahmen einer weiteren ganz besonders bevorzugten Ausführungsform der vorliegenden Erfindung enthält das erfindungsgemäße Granulat kein Antioxidans.

Vorzugsweise enthält die Zusammensetzung zur Herstellung des Granulats, die das das Polyvinylacetal enthält, höchstens 2 Gew.-%, besonders bevorzugt höchstens 1 Gew.-% externe Weichmacher. Externe Weichmacher können durch geeignete Verfahren, beispielsweise Extraktion aus dem Granulat bzw. der Zusammensetzung zur Herstellung des Granulats abgetrennt werden. Die genauen Verfahrensparameter sind dem Fachmann bekannt, wobei diese vom einzelnen Weichmacher abhängig sind.

Das erfindungsgemäße Verfahren zur Herstellung der Polyvinylacetal umfassenden Granulaten ist sehr schonend. Dementsprechend können durch das erfindungsgemäße Verfahren insbesondere auch Granulate erhalten werden, die Polyvinylacetale mit einer sehr geringen Polydispersität enthalten. Gemäß einer besonderen Ausführungsform umfassen die in erfindungsgemäß erhältlichen Granulaten enthaltenen Polyvinylacetale eine Polydispersität $M_w/M_n$ im Bereich von 1 bis 5, insbesondere 1 bis 3. Diese Größe kann beispielsweise durch Gelpermeationschromatographie ermittelt werden.

Die erfindungsgemäßen Granulate können eine relativ geringe Oberfläche aufweisen. Die gemäß der BET-Methode (Brunauer, Emmett u. Teller) bestimmte Oberfläche kann beispielsweise im Bereich von 0,1 $m^2$/kg bis 300 $m^2$/kg, vorzugsweise von 0,5 $m^2$/kg bis 30 $m^2$/kg und besonders bevorzugt 1 $m^2$/kg bis 3 $m^2$/kg liegen.

Die durch das Auflösen der erfindungsgemäßen Granulate erhaltenen ethanolischen Lösungen weisen eine relativ geringe Trübung und relativ geringe Gelbwerte auf. Gemäß einem besonderen Aspekt der vorliegenden Erfindung weist eine ethanolische Lösung einen Gelbwert von höchstens 5, vorzugsweise höchstens 3 auf.

Zur Bestimmung des Gelbwertes und der Trübung wird von der zu messenden Probe der Feststoff (nach DIN EN ISO 3251) bestimmt, da dieser bei der Herstellung der 10 %igen Lösung in den Lösemitteln/Lösemittelgemischen berücksichtigt wird. Anschließend wird die Lösung hergestellt, in Hellma-Küvetten 50x50mm mit Teflondeckel blasen- und schlierenfrei abgefüllt und spätestens 30 Sekunden nach Abfüllung bei Raumtemperatur der Gelbwert und die Trübung der Lösung mit einem Gerät der Fa. HunterLab, Ultra Scan gegen E-Wasser bestimmt.

Mögliche Einsatzgebiete für das erfindungsgemäße Granulat sind dem Fachmann offensichtlich. Es eignet sich insbesondere für alle Anwendungen, die für Polyvinylacetale, insbesondere für Polyvinylformale und/oder Polyvinylbutyrale vorgezeichnet sind. Aufgrund seines charakteristischen Eigenschaftsprofils ist es jedoch insbesondere bei Anwendungen von Vorteil, bei welchen das Granulat zumindest in einem Zwischenschritt nochmal aufgelöst und/oder aufgeschmolzen werden muss, da in diesem Zusammenhang die Vorteile der erhöhten Auflösegeschwindigkeit und/ oder der gleichmäßigeren Schmelzgeschwindigkeit besonders zum Tragen kommen.

Erfindungsgemäß besonders bevorzugte Anwendungsgebiete umfassen die Verwendung des Granulats als Rohstoff für die Herstellung von Verbundglasfolien, als Bindemittel, insbesondere als Bindemittel für Druckfarben und Beschichtungen, als, vorzugsweise temporäre, Bindemittel für Keramiken, als Bindemittel für thermoentwickelbare photosensitive Schichten und als Klebstoffe sowie wieder abziehbare Beschichtungen. Auch ist es zur Herstellung von Fasern besonders vorteilhaft einsetzbar.

In vielen Fällen werden auch neue, erweiterte Einsatzbereiche zugänglich; beispielsweise im Bereich der Additive für Bauchemikalien (Fliesenkleber, Mörtel, zementäre Massen und dergleichen), im Bereich Emulsions- und Suspensionspolymerisation.

Ein im Rahmen der vorliegenden Erfindung besonders bevorzugtes Anwendungsgebiet des erfindungsgemäßen Granulats sind Flächengebilde und Formkörper, insbesondere Filme oder Folien, vorzugsweise mit einer Dicke im Bereich von 0,5 $\mu$m bis 2,0 mm. Diese können - je nach gewünschter Glasübergangstemperatur Tg - gewisse Mengen, vorzugsweise kleiner 60 Gew.%, insbesondere kleiner 50 Gew.-%, bezogen auf die Gesamtmenge an Polyvinylacetal, üblicher Weichmacher oder Weichmachergemische enthalten. Eine Aufstellung von handelsüblichen Weichmachern, die Angaben über deren Verträglichkeit mit Polyvinylacetalen, insbesondere Polyvinylbutyral, enthält, kann beispielsweise der Druckschrift Modern Plastics Encyclopedia 1981/1982, S. 710 bis 719 entnommen werden. Bevorzugte Weichmacher sind Diester von aliphatischen Diolen, insbesondere von aliphatischen Polyätherdiolen bzw. Polyätherpolyolen, mit aliphatischen Carbonsäuren, vorzugsweise Diester von Polyalkylenoxiden, insbesondere Diester des Di-, Tri- und Tetraethylenglykols mit aliphatischen ($C_6$-$C_{10}$)-Carbonsäuren, vorzugsweise 2-Ethylbuttersäure und n-Heptansäure, ferner Diester von aliphatischen oder aromatischen ($C_2$-$C_{18}$)-Dicarbonsäuren, vorzugsweise Adipin-, Sebazin- und Phthalsäure, mit aliphatischen ($C_4$-$C_{12}$)-Alkoholen, vorzugsweise Dihexyladipat, Phthalate, Trimellitate, Phosphate, Fettsäureester, insbesondere Triethylenglykol-bis-(2-ethylbutyrat), aromatische Carbonsäureester, insbesondere Dibenzoate, und/oder Hydroxycarbonsäureester. Dennoch hat es sich im Rahmen der vorliegenden Erfindung als ganz besonders günstig erwiesen, dass die Polyvinylacetale keine weiteren Zusätze enthalten.

Das ggf. plastifizierte Polyvinylacetal-Granulat wird vorzugsweise mittels thermoplastischer Extrusion durch Breitschlitzdüsen zu vorzugsweise 0,5 μm bis 2,0 mm, insbesondere zu 0,2 bis 2 mm dicken Flachfolien extrudiert. Die Extrusionstemperatur der Extrusionsformmassen liegt im üblichen Bereich, vorzugsweise zwischen 140 und 250°C, wobei kurzzeitig auch höhere Temperaturen erreicht werden können. Die Herstellung von Flachfolien kann auch durch thermoplastische Verformung des erfindungsgemäß Polyvinylacetal-Granulats auf einem beheizbaren Dreiwalzenstuhl oder einem Kalander erfolgen.

Das Granulat kann dabei außer den vorstehend bereits genannten Stabilisatoren und Weichmachern noch weitere übliche Zusätze enthalten, wie beispielsweise geringe Mengen an basischen Verbindungen, vorzugsweise beispielsweise 0,001 bis 0,1 Gew.-%, bezogen auf das Polyvinylacetal, Alkalihydroxid oder alkalisch reagierendes Alkalisalz zur Stabilisierung des Polyvinylacetals gegen saure Hydrolyse. Dieser Alkaligehalt wird üblicherweise auch als Alkalititer des Polyvinylacetals bezeichnet. Die ggf. plastifizierte Polyvinylacetal-Granulat kann ferner bekannte Antihaflmittel in üblichen Mengen enthalten, wie beispielsweise Alkalisalze oder Erdalkalisalze von Carbonsäuren, vorzugsweise Kalium oder Magnesiumsalze der Ameisensäure oder der Essigsäure oder Kombinationen dieser Salze mit Kalium- oder Magnesiumsalzen von Hydroxycarbonsäuren, ferner Alkali- oder Erdalkalisalze von Dicarbonsäuren oder Magnesiumacetylacetonat sowie verschiedene Silane oder Siloxane, wie beispielsweise 3-(Methyltriethylenglykoxy)-propylsilan-tris-methyltriethylenglykolester. Die Einsatzmenge an diesen Antihaftmitteln liegt vorzugsweise im Bereich von 0,001 bis 0,2 Gew.-%, bezogen auf das Gesamtgewicht des erfindungsgemäßen Granulats.

Bei der Mitverwendung von zusätzlichen Lichtstabilisatoren, vorzugsweise UV-Stabilisatoren, wie beispielsweise den bekannten Benzotriazolderivaten, hat sich überraschenderweise gezeigt, dass die Einsatzmengen dieser UV-Stabilisatoren erheblich reduziert werden können, wenn man sie in Kombination mit dem vorstehend beschriebenen Stabilisatorsystem einsetzt. Dies ist einerseits ökonomisch vorteilhaft und führt außerdem überraschenderweise zu Folien mit verbesserten Farbwerten, d.h. geringerer Eigenfarbe der Folien, was für deren Verwendung zur Herstellung von Glasverbunden besonders wichtig ist.

Darüber hinaus ist es bei der Folienextrusion von plastifizierten Polyvinylacetalen, insbesondere Polyvinylbutyralen besonders wichtig, bei möglichst hohen Massetemperaturen extrudieren zu können, um dadurch die Schmelzviskosität der plastifizierten Extrusionsmasse möglichst stark absenken bzw. möglichst niedrig halten und möglichst hohe Extruderdurchsätze pro Zeiteinheit erzielen zu können, ohne die Extrusionsmasse oxidativ und/oder thermisch zu schädigen und Vergilbungen zu erzeugen. Durch die Verwendung des erfindungsgemäßen Granulats kann diese Forderungen weitestgehend erfiillt werden.

Die vorstehend beschriebenen Folien eignen sich insbesondere für die Herstellung von Verbundsicherheitsgläsern, welche günstigerweise in bekannter Weise nach der Autoklavenmethode erfolgt, bei der Test-Glasverbunde von 30 x 30 cm in einem Autoklaven bei 140°C, einem Druck von 12 bar und 2 Stunden Haltezeit hergestellt werden. Die erfindungsgemäß deutlich reduzierte Verfärbung bzw. Vergilbung der Folien kann in bekannter Weise mit Hilfe des Yellowness Index nach ASTM-D-1925 ermittelt werden.

Ganz besonders eignet sich das erfindungsgemäße Granulat auch zur Herstellung einer Polyvinylacetal-Lösung, insbesondere einer Beschichtungszusammensetzung. Die Beschichtungszusammensetzung kann dabei auf den unterschiedlichsten Substraten, insbesondere auf Holz, Metall, Kunststoff, Glas, Textilien, Papier, Leder sowie keramischen und mineralischen Untergründen, appliziert werden. Sie kann als weitere Bestandteile, insbesondere weitere Polymerharze, Weichmacher, Pigmente, Füllstoffe, Stabilisatoren, Haftungsverbesserer, rheologische Hilfsmittel, den pH-Wert beeinflussende Additive und Substanzen enthalten, die chemische Reaktionen sowohl zwischen dem Polyvinylacetal mit sich selbst oder mit den anderen Polymerharzen als auch zwischen den anderen Polymerharzen untereinander katalysieren oder ermöglichen.

Die Aufbringung der Beschichtung kann dabei sowohl als Pulver, das anschließend bei erhöhter Temperatur aufgeschmolzen wird, als Schmelze, wie auch als auch aus Lösung oder Dispersion, wobei die Beschichtungszusammensetzung auf das zu beschichtende Substrat aufgebracht und dann getrocknet wird, mittels dem Fachmann bekannten Beschichtungsverfahren erfolgen. Dabei kommen insbesondere in den beiden letzteren Fällen die hervorragenden Bindemitteleigenschaften der Polyvinylacetale zum Tragen, indem sie ein äußerst gleichmäßiges Abbinden der Lösung bzw. der Dispersion ermöglichen und gleichzeitig ein Gelieren der Beschichtungszusammensetzung verhindern bzw.

deutlich verzögern.

Erfindungsgemäß bezeichnen Bindemittel Substanzen, die gleich- oder verschiedenartige Stoffe miteinander verbinden, wobei das Abbinden der Stoffe durch physikalisches Trocknen der Lösung oder Dispersion erfolgt. Bei Anstrichstoffen und Lacken, die im Rahmen einer besonders bevorzugten Ausführungsform der vorliegenden Erfindung im Vordergrund stehen, sind Bindemittel gemäß DIN 55945 (12/1988) definiert und kennzeichnen den oder die nichtflüchtigen Anteile ohne Pigment und Füllstoff, aber einschließlich Weichmachern, Trockenstoffen u.a. nichtflüchtigen Hilfsstoffen. Aufgabe der Bindemittel ist die Bindung der Pigmentteilchen untereinander und mit dem Untergrund.

Im Rahmen einer bevorzugten Ausführungsform der vorliegenden Erfindung wird die Beschichtung als Dispersion auf das zu beschichtende Substrat aufgebracht. Der Begriff "Dispersionen" steht gemäß DIN 53900 (Juli 1972) für ein disperses System aus mehreren Phasen, von denen eine kontinuierlich (Dispersionsmittel) und mindestens eine weitere fein verteilt ist (dispergierte Phase, Dispergens). Das Dispersionsmittel ist im vorliegenden Fall ein Lösungsmittel oder -gemisch, welches auch Wasser enthalten kann. Das Dispergens kann je nach Anwendung frei gewählt werden. Es umfasst beispielsweise Farbmittel (Pigmente), insbesondere für Druckfarben.

Zweckmäßigerweise ist das Dispergens in den jeweils eingesetzten Mengen im Dispersionsmittel nicht vollständig löslich. Die Löslichkeit ist bei 25°C im Dispersionsmittel vorzugsweise kleiner 1,0 g pro 100 g Dispersionsmittel, zweckmäßigerweise kleiner 0,1 g pro 100 g, Dispersionsmittel.

Weiterhin ist das Dispergens vorzugsweise ein Feststoff, d. h. es weist insbesondere bei 25°C und bei Normaldruck (101325 Pa) eine dynamische Viskosität größer 10 mPa s, zweckmäßigerweise größer 100 kPas s auf.

Im Rahmen dieser Ausführungsform wird das Dispergieren der zu dispergierenden Teilchen durch die Polyvinylacetale erleichtert, indem sie die Grenzflächenspannung zwischen den beiden Komponenten erniedrigen, also eine Benetzung herbeiführen. Die Benetzungs-Tendenz lässt sich aus der Bestimmung des Randwinkels, den die Flüssigkeiten mit der festen Oberfläche bildet, ableiten:

$$\sigma_1 - \gamma_{1,2} = \sigma_2 \cdot \cos \alpha$$

[$\sigma_1$ bzw. $\sigma_2$=Oberflächenspannung des Festkörpers bzw. der Flüssigkeiten, $\gamma_{1,2}$=Grenzflächenspannung fest/flüssig, $\alpha$=Randwinkel od. Kontaktwinkel) (s. Römpp Lexikon Chemie - Version 2.0, Stuttgart/New York: Georg Thieme Verlag 1999) - Stichwort: Benetzung].

Die Zusammensetzung der Dispersion kann im Rahmen der vorliegenden Erfindung je nach Anwendung frei gewählt werden.

Im Rahmen einer weiteren besonders bevorzugten Ausführungsform der vorliegenden Erfindung wird die Beschichtung als Lösung auf das zu beschichtende Substrat aufgebracht. Lösungen bezeichnen im Rahmen der vorliegenden Erfindung homogene flüssige Gemische verschiedener Stoffe, wobei noch die winzigsten Teilvolumina der Lösung eine gleichartige Zusammensetzung aufweisen. Sie umfassen mindestens ein Lösungsmittel, d. h. mindestens eine Flüssigkeit mit einer dynamischen Viskosität, insbesondere bei 25°C und bei Normaldruck (101325 Pa), im Bereich von 0,1 bis 10 mPa s.

Im Rahmen dieser Ausführungsform ist die zu lösende Substanz, insbesondere das Polyvinylacetal, vorzugsweise in den jeweils eingesetzten Mengen im Lösungsmittel, insbesondere in Alkoholen, welche vorzugsweise 1 bis 8 Kohlenstoffatome umfassen, vollständig löslich. Die Löslichkeit ist bei 25°C im Lösungsmittel vorzugsweise größer 0,1 g pro 100 g Lösungsmittel, zweckmäßigerweise größer 1,0 g pro 100 g, Lösungsmittel.

Die Zusammensetzung der Lösung kann im Rahmen der vorliegenden Erfindung je nach Anwendung frei gewählt werden. Als Lösungsmittel bzw. Co-Lösungsmittel haben sich insbesondere Alkohole, insbesondere aliphatische Alkohole mit 1 bis 12, vorzugsweise 1 bis 8, insbesondere 1 bis 4, Kohlenstoffatomen ganz besonders bewährt. Ganz besonders vorteilhafte Ergebnisse können unter Verwendung von Methanol, Ethanol, n-Propanol, isoPropanol, n-Butanol, sec-Butanol und/oder tert.-Butanol erzielt werden.

Die Herstellung der Dispersion bzw. der Lösung kann auf an sich bekannte Weise, vorzugsweise mechanisch, erfolgen.

Obwohl die vorstehend beschriebenen Polyvinylacetale als Bindemittel ganz besonders geeignet sind, kann es im Einzelfall zweckmäßig sein, weitere Co-Bindemittel einzusetzen, um beispielsweise die Pigmentbenetzung bzw. - dispergierung oder Haftung zu verbessern. Geeignete Co-Bindemittel umfassen alle bekannten Bindemittel, vorzugsweise organische Bindemittel und andere Polymere

Die Mengen an Co-Bindemittel können je nach Anwendung beliebig gewählt werden.

Mögliche Einsatzgebiete der Beschichtungszusammensetzungen sind für den Fachmann aufgrund der vorliegenden Beschreibung unmittelbar offensichtlich.

Sie eignen sich insbesondere für solche Anwendungen, die für Lösungen und Dispersionen enthaltend konventionelle Bindemittel vorgezeichnet sind.

Günstigerweise wird die Beschichtungszusammensetzung als Druckfarbe eingesetzt. Druckfarben bezeichnen flüssige, pastöse oder pulverförmige Farbmittel-Zubereitungen, die in Druckmaschinen zur Anwendung kommen. Das in verschiedenen Druckverfahren zu bedruckende Material kann im allgemeinen saugend oder nicht saugend, flach (z.B. Papier, Karton, Leder, Folien), zylindrisch oder konisch (z.B. Dosen od. a. Hohlkörper) sein. Bezüglich der besonderen Verhältnisse des Bedruckens von Textilien wird auf die Fachliteratur - Stichwort "Textildruck" verwiesen.

Die Druckfarben sind feinstverteilte Gemische, Dispersionen oder Lösungen, die zusammengesetzt sind aus:

- Farbmitteln (Pigmenten einschließlich Füllstoffen oder Farbstoffen, bei Leuchtdruckfarben auch fluoreszierend),
- Bindemittellösungen (meist (Druck-)Firnisse genannt) und
- Zusatzstoffen (z.B. Trockenstoffen, Verdünnungsmitteln, Wachsdispersionen, Katalysatoren bzw. Initiatoren für die Strahlungstrocknung).

Die Zusammensetzung der ggf. nach dem Flushing-Verfahren zubereiteten Druckfarben ist nicht nur vom Druckverfahren abhängig (Hoch-, Flach-, Tief- und Durchdruck), sondern besonders vom Bedruckstoff und von den Anforderungen an das Druckergebnis hinsichtlich Aussehen (Farbton, Transparenz oder Opazität, Glanz, Fluoreszenz) und physikalischen Eigenschaften (Wasser-, Fett-, Lösungsmittel-, Scheuerfestigkeit, Kaschier- und Überlackierfähigkeit etc.). Ein heute wieder aktueller Gesichtspunkt ist - beim Recycling - die aufgebrachten Druckfarben ggf. wieder entfernen zu können (De-inking).

Für weitere Details wird auf die gängige Fachliteratur, insbesondere auf die folgenden Druckschriften verwiesen, auf deren Offenbarung hiermit explizit bezug genommen wird:

- Erwin Schulz, "Flexodruck von A bis Z", Polygraph Verlag, Frankfurt am Main, 1987
  Nachschlagewerk zum Thema "Flexodruck"
- "The Printing Ink Manual" Chapman & Hall
  detaillierte Informationen zu den Ausgangsmaterialien und gängigen Formulierungen
- Chris Williams "Printing Ink Technology" PIRA detaillierte Informationen zur Drucktechnologie

Im Rahmen einer weiteren bevorzugten Ausführungsform der vorliegenden Erfindung wird das erfindungsgemäße Granulat zur Herstellung ionenleitfähiger Zwischenschichten für elektrochrome Systeme verwendet.

Nachfolgend wird die vorliegende Erfindung durch Beispiele und Vergleichsbeispiele illustriert, ohne dass hierdurch ein Beschränkung des Erfindungsgedankens erfolgen soll. Die in diesem Zusammenhang eingesetzten Polyvinylacetaltypen (Mowital®) sind bei der Firma Kuraray Specialities Europe GmbH erhältlich.

Beispiel 1

Die nachfolgend genannten Polyvinylacetal-Typen wurden mittels einem Leistritz Doppelschneckenextruder vom Typ Micro 27 / GL 44 D extrudiert (300 Upm, ca. 10 kg/h Durchsatz, gravimetrische Feststoffdosierung, 3 mm 2-Lochdüse, Wasserbad, Granulator), wobei das Polyvinylacetal-Pulver gleichmäßig zudosiert und im Extruder aufgeschmolzen wurde. Die Schmelze wurde entgast, ausgetragen und die resultierenden Schmelzestränge wurden abgekühlt und granuliert. Die genauen Verfahrensparameter sind in Tabelle 1 festgehalten. Eine Gegenüberstellung der Eigenschaften des Granulats und des eingesetzten Pulvers findet sich in Tabelle 2. Man erkennt, dass sich die erfindungsgemäßen Granulate durch eine vergleichsweise höheren Feststoffanteil auszeichnen. Darüber hinaus weisen die zugehörigen Lösungen eine vergleichsweise niedrigere Viskosität, einen vergleichsweisen höheren Gelbwert und eine vergleichsweise niedrigere Trübung auf.

Tabelle 1: Verfahrensparameter der Extrusion

| **Mowital-Typ** | **Dauer [h]** | **Antriebsstrom [A]** | **Massedruck [bar]*** | **Temperaturzonen [°C]** | | | | | | | | | | |
|---|---|---|---|---|---|---|---|---|---|---|---|---|---|---|
| | | | | **1** | **2** | **3** | **4** | **5** | **6** | **7** | **8** | **9** | **10** | **11** |
| **B 18 S** | 02:10 | 13,4 | 0,0 | 60 | 80 | 112 | 120 | 143 | 150 | 170 | 170 | 160 | 161 | 150 |
| **B20 H** | 02:05 | 9,6 | 0,0 | 60 | 80 | 129 | 130 | 150 | 190 | 200 | 200 | 190 | 190 | 190 |
| **B 30 HH** | 02:10 | 13,1 | 0,0 | 60 | 80 | 130 | 155 | 175 | 180 | 180 | 180 | 190 | 195 | 180 |
| **B30 H** | 02:07 | 15,1 | 0,0 | 60 | 80 | 130 | 155 | 176 | 180 | 180 | 180 | 190 | 195 | 180 |
| **B30 T** | 02:09 | 14,5 | 0,0 | 60 | 80 | 130 | 155 | 175 | 180 | 180 | 180 | 190 | 195 | 180 |
| **B45 H** | 02:17 | 13,1 | 0,2 | 60 | 80 | 130 | 155 | 176 | 180 | 180 | 180 | 190 | 195 | 180 |
| **B60 HH** | 01:45 | 11,8 | 5,6 | 60 | 80 | 140 | 160 | 184 | 190 | 200 | 200 | 199 | 204 | 190 |
| **B60 H** | 02:19 | 12,6 | 12,5 | 60 | 80 | 140 | 160 | 185 | 190 | 200 | 200 | 200 | 213 | 195 |
| **B 60 T** | 02:20 | 12,8 | 11,9 | 60 | 80 | 140 | 160 | 185 | 190 | 200 | 200 | 200 | 215 | 200 |
| * teilweise nicht zu messen, da die Produkte sehr niedrigviskos sind. | | | | | | | | | | | | | | |

Tabelle 2: Eigenschaftsvergleich (Granulat/Pulver)

| **Mowital-Typ** | **Viskosität (10% Ethanol) [mPas] DIN EN ISO 2555** | | **Feststoffgehalt [%] DIN EN ISO 3251** | | **Gelbwert (Ethanol) ./. * KSE Messmethode** | | **Trübung (Ethanol) ./.* KSE Messmethode** | | **Gelbwert (MEK/Toluol 50/50 w/w) ./.* KSE Messmethode** | | **Trübung (MEK/Toluol 50150 w/w) ./.* KSE Messmethode** | |
|---|---|---|---|---|---|---|---|---|---|---|---|---|
| | **Pulver** | **Granulat** | **Pulver** | **Granulat** | **Pulver** | **Granulat** | **Pulver** | **Granulat** | **Pulver** | **Granulat** | **Pul**ver | **Granulat** |
| **B 18 S** | 18,1 | 18,3 | 99,76 | 99,8 | 5,72 | 6,84 | 3,4 | 4,16 | 7,82 | 8,83 | 5,61 | 3,36 |
| **B 20 H** | 21,0 | 20,1 | 98,67 | 99,83 | 11,8 | 7,31 | 3,85 | 1,91 | 8,88 | 7,24 | 2,86 | 2,41 |
| **B 30 T** | 41,3 | 39,0 | 98,43 | 99,89 | 8,81 | 7,74 | 1,37 | 1,08 | nm. | nm. | nm. | nm. |
| **B 30 H** | 45,4 | 45,0 | 98,89 | 99,94 | 5,48 | 6,07 | 1,33 | 0,87 | 7,68 | 8,14 | 1,47 | 1,14 |
| **B 30 HH** | 46,8 | 45,5 | 98,68 | 99,81 | 6,65 | 7,59 | 1,25 | 0,91 | 7,93 | 7,29 | 0,88 | 0,79 |
| **B 45 H** | 69,0 | 62,4 | 99,98 | 99,94 | 4,73 | 6,28 | 1,12 | 1,08 | 5,07 | 6,59 | 1,71 | 1,19 |
| **B 60 HH** | 133,5 | 128,7 | 98,91 | 99,86 | 5,31 | 5,87 | 1,15 | 1,21 | 4,97 | 5,38 | 1,13 | 1,1 |
| **B 60 T** | 204,4 | 206,8 | 98,67 | 99,97 | 3,99 | 4,21 | 1,07 | 1,22 | nm. | nm. | nm. | nm. |
| **B 60 H** | 214,7 | 203,0 | 99,19 | 99,96 | 3,73 | 4,64 | 0,74 | 1,28 | 6,12 | 6,95 | 1,79 | 1,48 |
| * Gelbwert und Trübung sind dimensionslose Angaben | | | | | | | | | | | | |

**Messmethode:**

Von der zu messenden Probe wird der Feststoff (nach DIN EN ISO 3251) bestimmt, da dieser bei der Herstellung der 10 %igen Lösung in den Lösemitteln/Lösemittelgemischen berücksichtigt wird. Anschließend wird die Lösung hergestellt, in Hellma-Küvetten 50x50mm mit Teflondeckel blasen- und schlierenfrei abgefüllt und spätestens 30 Sekunden nach Abfüllung bei Raumtemperatur der Gelbwert und die Trübung der Lösung mit einem Gerät der Fa. HunterLab, Ultra Scan gegen E-Wasser bestimmt.

Toluol (Riedel-de-Häen Bestell-Nr.: 24526)
Ethanol absolut mit MEK vergällt (Riedel-de-Häen Bestell-Nr.:24194)
MEK (Riedel-de-Häen Bestell-Nr.: 33407)

Vergleichsbeispiel 1

Mowital SB 30 HH wurde mittels einem Pharmapaktor L 200/50 P, ausgestattet mit konkaven Glattwalzen, kompaktiert. Zur Vorverdichtung wurde eine zylindrische Schnecke mit konischem Einzugsteil verwendet. Die erzeugten Schülpenbänder wurden gesammelt und anschließend auf einer zylindrischen Siebscheibe der Baureihe FC 200 zerkleinert, auf welcher ein Maschendrahtgewebesieb mit einer Oberkorngröße von 2,0 mm oder 3,0 montiert war. Nach der Zerkleinerung wurde das erzeugte Granulat einer Siebanalyse unterzogen, deren Ergebnisse in Tabelle 3 zusammengefasst sind.

Tabelle 3: Ergebnisse der Siebanalyse

| Siebgröße in [μm] | Rückstand in [Gew.-%] | |
|---|---|---|
| | Vergleichsbeispiel 1 | Vergleichsbeispiel 2 |
| 125 | 97 | 96 |
| 250 | 94 | 95 |
| 355 | 92 | 93 |
| 500 | 87 | 90 |
| 800 | 73 | 87 |
| 1000 | 61 | 84 |
| 1400 | 28 | 70 |
| 2000 | 0 | 48 |
| 3000 | | 0,3 |

Vergleichsbeispiel 2

In einem Doppelschneckenextruder der Fa. Theyson mit einem Schneckendurchmesser von 30 mm und einem L/D Verhältnis von 44 mit Seitendosierung bei 20 D wurde Mowital B 30 H der Fa. Kuraray Specialisties Europe GmbH mit einer Geschwindigkeit von 15 kg /h extrudiert. Hierbei wurde das Pulver über den Haupteinzug in den Extruder gegeben, wobei die Temperatur im Einzugsbereich 50 °C, in der Schmelzzone 150 °C und in der Düse 160°C betrug. Der erhaltene Strang wurde granuliert, wobei ein Granulat mit einer Schüttdichte von 620 g/l erhalten wurde. Zu Beginn konnte ohne Probleme granuliert werden. Nach einer Zeit von ca. 10 Minuten traten jedoch starke Druckschwankungen auf, wobei der Strang ungleichmäßig wurde.

Nach 5, 10 und 20 Minuten wurde jeweils eine Probe des Granulats genommen.

Von der zu messenden Probe wird der Feststoff (nach DIN EN ISO 3251) bestimmt, da dieser bei der Herstellung der 10 %igen Lösung in den Lösemitteln/Lösemittelgemischen berücksichtigt wird.

Anschließend wird aus den Granulaten eine 10-%ige ethanolische Lösung hergestellt, in Hellma-Küvetten 50x50mm mit Teflondeckel blasen- und schlierenfrei abgefüllt und spätestens 30 Sekunden nach Abfüllung wird bei Raumtemperatur der Gelbwert und die Trübung der Lösung mit einem Gerät der Fa. HunterLab, Ultra Scan gegen E-Wasser bestimmt.

Der Gelbwert der Probe, die nach 5 Minuten genommen wurde betrug 1,7, wohingegen der Gelbwert der Probe, die nach 10 Minuten genommen wurde, 8,3 betrug. Die Lösung, die aus der nach 20 Minuten gezogenen Probe hergestellt wurde, zeigte einen Gelbwert von 10,2.

Beispiel 2

Das Vergleichsbeispiel 2 wurde im wesentlichen wiederholt, wobei jedoch das PVB-Pulver über die Seitendosierung in den Extruder gegeben wurde Der Zylinder der Seitendosierung ist wassergekühlt. Es traten während des Extrudierens über einen Zeitraum von 2 Stunden keine Druckschwankungen auf, wobei über diesen Zeitraum der Strang gleichmäßig gebildet wurde.

Nach 5, 10 20, 60 und 90 Minuten wurde jeweils eine Probe des Granulats genommen. Anschließend wurde der Gelbwert der verschiedenen Proben gemäß der zuvor dargelegten Methode bestimmt.

Der Gelbwert der Probe, die nach 5 Minuten genommen wurde betrug 1,8, wohingegen der Gelbwert der Probe, die nach 10 Minuten genommen wurde, 1,7 betrug. Die Lösung, die aus der nach 20 Minuten gezogenen Probe hergestellt wurde, zeigte einen Gelbwert von 1,9. Der Gelbwert der Proben blieb über die gesamte Zeit im wesentlichen konstant, wie dies die Gelbwerte der nach 60 bzw. 90 Minuten genommenen Proben zeigte, wobei der Gelbwert der Probe, die nach 60 Minuten genommen wurde, 1,8 und der nach 90 Minuten genommenen Probe 1,7 betrug.

**Patentansprüche**

1. Verfahren zur Herstellung eines Granulats enthaltend mindestens ein Polyvinylacetal, erhältlich durch Umsetzung mindestens eines Polymers (A) mit mindestens einer Verbindung (B), wobei das Polymer (A)

   a.) 1,0 bis 100,0 Gew.-% Struktureinheiten der Formel (1)

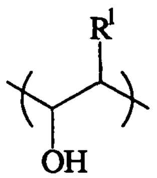

(1)

   worin $R^1$ Wasserstoff oder Methyl bedeutet,
   b.) 0 bis 99,0 Gew.-% Struktureinheiten der Formel (2)

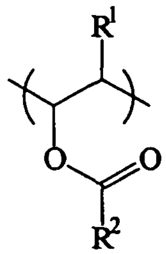

(2)

   worin $R^2$ Wasserstoff oder einen Alkylrest mit 1 bis 6 Kohlenstoffatomen darstellt,
   c.) 0 bis 70,0 Gew.-% Struktureinheiten der Formel (3)

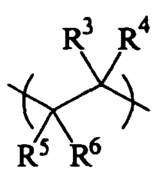

(3)

   worin $R^3$, $R^4$, $R^5$ und $R^6$, jeweils unabhängig voneinander Reste mit einem Molekulargewicht im Bereich von 1 bis 500 g/mol sind, jeweils bezogen auf das Gesamtgewicht des Polymers (A) enthält,

   wobei die Verbindung (B) der Formel (4) genügt,

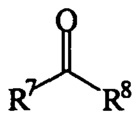

**(4)**

worin $R^7$ und $R^8$ jeweils unabhängig voneinander Wasserstoff, COOH, COOM, eine Alkylgruppe mit 1 bis 10 Kohlenstoffatomen oder eine gegebenenfalls substituierte Arylgruppe mit 6 bis 12 Kohlenstoffatomen sind und wobei M ein Metallkation oder ein gegebenenfalls alkyliertes Ammoniumkation ist, **dadurch gekennzeichnet, dass** man eine das Polyvinylacetal enthaltende Zusammensetzung in einem Ein- oder Zweischneckenextruder, Mehrwellenkneter, Kneter, Walzwerk und/oder einem Kalander in den schmelzflüssigen Zustand überführt und entsprechend der gewünschten Korngröße granuliert.

**2.** Verfahren gemäß Anspruch 1, **dadurch gekennzeichnet, dass** man die Polyvinylacetal enthaltende Zusammensetzung durch Erwärmen auf 100 bis 340 °C in den schmelzflüssigen Zustand überführt.

**3.** Verfahren gemäß mindestens einem der vorangehenden Ansprüche, **dadurch gekennzeichnet, dass** man das Granulat durch Heißabschlag, Kaltabschlag oder Strangextrusion herstellt.

**4.** Verfahren gemäß mindestens einem der vorangehenden Ansprüche, **dadurch gekennzeichnet, dass** man während dem Überführen in den schmelzflüssigen Zustand ein Treibmittel zusetzt.

**5.** Verfahren gemäß mindestens einem der vorangehenden Ansprüche, **dadurch gekennzeichnet, dass** man zumindest einen Teil der Polyvinylacetal enthaltenden Zusammensetzung über mindestens eine Seitenstromzuführung in einen Extruder überführt.

**6.** Verfahren gemäß mindestens einem der vorangehenden Ansprüche 1 bis 5, **dadurch gekennzeichnet, dass** man den Bereich des Extruders vom Haupteinzug bis zu einer Länge von mindestens 15* UD kühlt.

**7.** Verfahren gemäß mindestens einem der vorangehenden Ansprüche, **dadurch gekennzeichnet, dass** man gasförmige Verbindungen, die beim Überführen der Polyvinylacetal enthaltenden Zusammensetzung in den schmelzflüssigen Zustand entsteht, aus der Zusammensetzung entfernt.

**8.** Granulat, erhältlich nach einem Verfahren gemäß mindestens einem der vorangehenden Ansprüche, **dadurch gekennzeichnet dass** es, bezogen auf sein Gesamtgewicht, mindestens 50,0 Gew.-% mindestens eines Polyvinylacetals enthält und eine Korngrößenverteilung mit einer Einheitlichkeit $d_{50}/d_{90}$ von größer als 0,8 aufweist.

**9.** Granulat nach Anspruch 8, **dadurch gekennzeichnet, dass** es eine Schüttdichte gemäß Norm 543 größer 550 g/l aufweist.

**10.** Granulat gemäß mindestens einem der Ansprüche 8 oder 9, **dadurch gekennzeichnet, dass** es weiterhin faserverstärkende Materialien enthält.

**11.** Granulat gemäß Anspruch 10, **dadurch gekennzeichnet, dass** es Kurzglasfasern, Langglasfasern, Aramidfasern und/oder Carbonfasern als faserverstärkendes Material enthält.

**12.** Verwendung eines Granulats nach mindestens einem der Ansprüche 8 bis 11 zur Herstellung einer Polyvinylacetal-Lösung.

**13.** Verwendung eines Granulats nach mindestens einem der Ansprüche 8 bis 11 zur Herstellung einer Folie.

**14.** Verwendung eines Granulats nach mindestens einem der Ansprüche 8 bis 11 zur Herstellung von Verbund-Sicherheitsgläsern.

**15.** Verwendung eines Granulats nach mindestens einem der Ansprüche 8 bis 11 als Bindemittel.

## Claims

1. Process for the production of a granular product containing at least one polyacetal obtainable by the reaction of at least one polymer (A) with at least one compound (B), the polymer (A) containing

a.) 1.0 to 100.0 % by wt. of structural units with the formula (1)

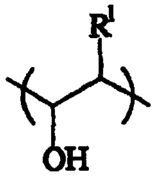

(1) in which $R^1$ represents hydrogen or methyl,
b.) 0 to 99.0 % by wt. of structural units with the formula (2)

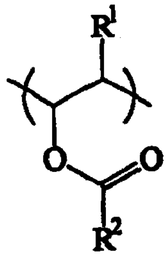
(2)

in which $R^2$ represents hydrogen or an alkyl radical with 1 to 6 carbon atoms,
c.) 0 to 70.0 % by wt. of structural units with the formula (3)

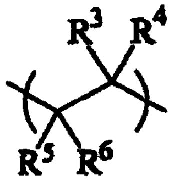
(3)

in which $R^3$, $R^4$, $R^5$ and $R^6$ represent, independently of each other, radicals with a molecular weight in the region of 1 to 500 g/mole,
based on the total weight of polymer(A) respectively,

compound (B) satisfying the formula (4)

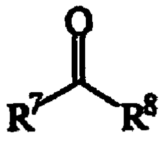
(4)

in which $R^7$ and $R^8$ are, independently of each other respectively, hydrogen, COOH, COOM, an alkyl group with 1 to 10 carbon atoms an optionally substituted aryl group with 6 to 12 carbon atoms, and in which M is a metal cation

or an optionally alkylated ammonium cation, **characterised in that** a composition containing the polyvinyl acetal is converted into the molten state in a single or double screw extruder, multi-shaft kneader, kneader, rolling mill and/or a calendar and granulated in accordance with the desired grain size.

2. Process according to claim 1 **characterised in that** the composition containing polyvinyl acetal is converted into the molten state by heating to 100 to 340 °C.

3. Process according to at least one of the preceding claims **characterised in that** the granular product is produced by hot cut, cold cut or extrusion.

4. Process according to at least one of the preceding claims **characterised in that** a blowing agent is added during conversion into the molten state.

5. Process according to at least one of the preceding claims **characterised in that** at least a part of the composition containing polyvinyl acetal is passed into an extruder via at least one side stream supply.

6. Process according to at least one of the preceding claims 1 to 5 **characterised in that** the area of the extruder from the main feed section up to a length of at least 15* L/D is cooled.

7. Process according to at least one of the preceding claims **characterised in that** gaseous compounds which are formed on conversion of the composition containing polyvinyl acetal into the molten state are removed from the composition.

8. Granular product obtainable according to a process according to at least one of the preceding claims **characterised in that** it exhibits, based on its total weight, at least 50,00 % by wt. of at least one polyvinyl acetal and a grain size distribution with a uniformity $d_{50}/d_{90}$ of more than 0.8.

9. Granular product according to claim 8, **characterised in that** it exhibits a bulk density according to standard 543 of more than 550 g/l.

10. Granular product according to at least one of claims 8 or 9 **characterised in that** it contains in addition fibre reinforcing materials.

11. Granular product according to claim 10 **characterised in that** it contains short glass fibres, long glass fibres, aramide fibres and/or carbon fibres as fibre reinforcing material.

12. Use of a granular product according to at least one of claims 8 to 11 for the production of a polyvinyl acetal solution.

13. Use of a granular product according to at least one of claims 8 to 11 for the production of a film.

14. Use of a granular product according to at least one of claims 8 to 11 for the production of composite safety glass.

15. Use of a granular product according to at least one of claims 8 to 11 as a binder.

**Revendications**

1. Procédé de préparation d'un granulat contenant au moins un acétal de polyvinyle, ledit granulat pouvant être obtenu en faisant réagir un polymère (A) avec au moins un composé (B), le polymère (A) contenant

   a.) 1,0 à 100,0 % en poids d'unités structurelles selon la formule (1),

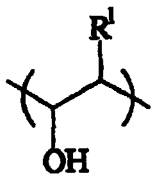
(1)

dans laquelle $R^1$ représente un hydrogène ou un groupe méthyle,
b.) 0 à 99,0 % en poids d'unités structurelles selon la formule (2),

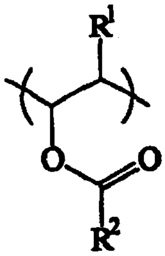
(2)

dans laquelle $R^2$ représente un hydrogène ou un groupe alkyle renfermant 1 à 6 atomes de carbone,
c.) 0 à 70,0 % en poids d'unités structurelles selon la formule (3),

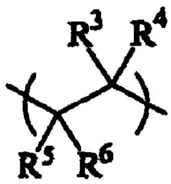
(3)

dans laquelle $R^3$, $R^4$, $R^5$ et $R^6$ représentent indépendamment l'un de l'autre des restes ayant une masse moléculaire comprise entre 1 et 500 g/mol,
les pourcentages en poids étant exprimés par rapport au poids total du polymère (A),

le composé (B) répondant à la formule (4)

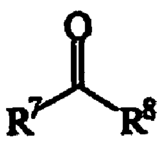
(4)

dans laquelle $R^7$ et $R^8$ représentent indépendamment l'un de l'autre un hydrogène, COOH, COOM, un groupe alkyle renfermant 1 à 10 atomes de carbone ou un groupe aryle le cas échéant substitué qui renferme 6 à 12 atomes de carbone, M étant un cation métallique ou un cation d'ammonium le cas échéant alkylé, **caractérisé en ce que** l'on fait fondre une composition contenant l'acétal de polyvinyle dans une extrudeuse mono-bis ou bi-vis, un malaxeur à plusieurs arbres, un malaxeur, un laminoir et/ou un cylindre de calandre pour ensuite la transformer en granulés de la granulométrie souhaitée.

**2.** Procédé selon revendication 1, **caractérisé en ce que** l'on fait fondre la composition contenant l'acétal de polyvinyle en la chauffant à des températures comprises entre 100 et 340 °C.

3. Procédé selon au moins une des revendications précédentes, **caractérisé en ce que** le granulat est produit par coupe à chaud, par coupe à froid ou par extrusion.

4. Procédé selon au moins une des revendications précédentes, **caractérisé en ce que** l'on ajoute un agent porogène au cours du processus de fusion.

5. Procédé selon au moins une des revendications précédentes, **caractérisé en ce que** l'on introduit au moins une partie de la composition contenant l'acétal de polyvinyle à travers au moins une entrée latérale dans l'extrudeuse.

6. Procédé selon au moins une des revendications 1 à 5 précédentes, **caractérisé en ce que** l'on refroidit la zone de l'extrudeuse s'étendant de l'alimentation principale jusqu'à une longueur d'au moins 15* L/D.

7. Procédé selon au moins une des revendications précédentes, **caractérisé en ce que** l'on enlève de la composition contenant l'acétal de polyvinyle des composés gazeux qui sont générés lorsqu'on fait fondre ladite composition.

8. Granulat pouvant être obtenu par un procédé selon au moins une des revendications précédentes, **caractérisé en ce qu'**il contient, par rapport à son poids total, au moins 50,0 % en poids d'au moins un acétal de polyvinyle et qu'il présente une granulométrie **caractérisée par** une homogénéité $d_{50}/d_{90}$ supérieure à 0,8.

9. Granulat selon la revendication 8, **caractérisé en ce qu'**il présente une densité apparente supérieure à 550 g/l, la mesure étant réalisée selon la norme 543.

10. Granulat selon au moins une des revendications 8 ou 9, **caractérisé en ce qu'**il contient, en outre, des matériaux fibreux de renforcement.

11. Granulat selon la revendication 10, **caractérisé en ce qu'**il contient en tant que matériau fibreux de renforcement des fibres de verre courtes, des fibres de verre longues, des fibres d'aramide et/ou des fibres de carbone.

12. Utilisation d'un granulat selon au moins une des revendications 8 à 11 pour préparer une solution d'acétal de polyvinyle.

13. Utilisation d'un granulat selon au moins une des revendications 8 à 11 pour préparer une feuille.

14. Utilisation d'un granulat selon au moins une des revendications 8 à 11 pour préparer des verres de sécurité feuilletés.

15. Utilisation d'un granulat selon au moins une des revendications 8 à 11 en tant que liant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4258638 A
- DE 19650848 A
- US 4323492 A
- GB 1221244 A
- US 4130539 A
- US 5914368 A


### In der Beschreibung aufgeführte Nicht-Patentliteratur


- Ullmann's Encyclopedia of Industrial Chemistry. Wiley-VCH, 1997
- **W. WALTER.** Kohlenhydrate. 1991, 425-468
- **J. FALBE ; M. REGITZ.** Römpp-Lexikon Chemie. 1996, vol. 10
- *Modern Plastics Encyclopedia,* 1981, 710-719
- Römpp Lexikon Chemie. Georg Thieme Verlag, 1999
- **ERWIN SCHULZ.** Flexodruck von A bis Z. Polygraph Verlag, 1987